# EUROPEAN PATENT SPECIFICATION

(11) **EP 4 409 844 B1**
(45) Date of publication and mention of the grant of the patent: **16.09.2026**
(21) Application number: 22801257.1
(22) Date of filing: 30.09.2022
(51) Int. Cl.: H04L 9/40, G06F 21/41

(54) **SINGLE LOGOUT**
EINZELANMELDUNG
DÉCONNEXION UNIQUE

(30) Priority: 30.09.2021 US 202163250713 P
(43) Date of publication of application: 07.08.2024
(73) Proprietor: Oracle International Corporation, Redwood Shores, CA 94065 (US)
(72) Inventor: SHARMA, Shobhank, Redwood Shores, California 94065 (US); EVANI, Venkata Subbarao, Redwood Shores, California 94065 (US); PANDIRI, Kranthi Kiran, Redwood Shores, California 94065 (US); NAGARAJA, Girish, Redwood Shores, California 94065 (US); DUNGEN, Martinus Petrus Lambertus van den, Redwood Shores, California 94065 (US); SUBBAIYAN, Ashok Kumar, Redwood Shores, California 94065 (US); KERMAIER, Ari M., Redwood Shores, California 94065 (US)
(74) Representative: Gill Jennings & Every LLP
(86) International application number: PCT/US2022/045370
(87) International publication number: WO 2023/056009

(56) References cited:
- EP-A1- 3 528 454
- CN-A- 110 336 820
- US-A1- 2016 277 390

## Description

### CROSS-REFERENCES TO RELATED APPLICATIONS

This application claims the benefit of U.S. Provisional Application No. 63/250,713, Filed on September 30, 2021, and entitled "Single Logout,".

### BACKGROUND

The adoption of cloud services has seen a rapid uptick in recent times. Various types of cloud services are now provided by different cloud service providers (CSPs). The term cloud service is generally used to refer to a service or functionality that is made available by a CSP to subscribing customers on demand, typically using a subscription model, using systems and infrastructure (commonly referred to as cloud infrastructure) provided by the CSP. Typically, the servers and systems included in the CSP-provided cloud infrastructure that is used to provide a cloud service to a subscribing customer are separate from the customer's own on-premise servers and systems. The CSP-provided infrastructure can include compute, storage, and networking resources. Customers can thus avail themselves of cloud services provided by the CSP without having to purchase their own hardware and software resources for the services. Cloud services are designed to provide a subscribing customer easy, scalable, and on-demand access to applications and computing resources without the customer having to invest in procuring the infrastructure for providing the services or functions. Various types or models of cloud services may be offered such as Software-as-a-Service (SaaS), Platform-as-a-Service (PaaS), Infrastructure-as-a-Service (IaaS), and others. A customer can subscribe to one or more cloud services provided by a CSP. The customer can be any entity such as an individual, an organization, an enterprise, and the like.

Different services offered by a CSP may have different logout procedures and/or logout requirements. In some instances, these different procedures and/or requirements can result in an unsatisfactory customer experience. Accordingly, further improvements are desired.

In CN 110336820 A, a single-point logout method and device are disclosed, involving obtaining an exit message sent by a first application system, wherein the exit message comprises a token of the first application system.

In EP3528454A1, a cloud-based identity and access management system that implements single sign-on ("SSO") receives a first request for an identity management service configured to allow for accessing an application is disclosed.

In US 2016/277390 A1, a multi-domain application requiring SSO and SLO operations in cloud environment including a multi-domain service (MDS) to redirect the calls for the multi-domain application to an identity provider to authenticate the user or to invoke the single logout services (SLOs) is disclosed.

### BRIEF SUMMARY

Aspects of the present disclosure relate to a method for a single logout between two independent systems. The method includes receiving a logout request from a user at a first one of two systems, logging the user out of the first one of the two systems, and utilizing a trust mechanisms to log the user out of the second one of the two systems. In some embodiments, the trust mechanism can include at least one token.

In some embodiments, the trust mechanism comprises at least one token. In some embodiments, the logout request directs the logging out of the user from the first one of the two systems. In some embodiments, logging the user out of the first one of the two systems comprises expiring a session of the user on the first system. In some embodiments, utilizing the trust mechanisms to log the user out of the second one of the two systems includes redirecting the user to the second system.

In some embodiments, utilizing the trust mechanisms to log the user out of the second one of the two systems includes sending a JSON web token (JWT) from the user browser to the second system. In some embodiments, the JWT can be a post logout redirect URL. In some embodiments, the JWT further comprises an IAM login private key.

In some embodiments, utilizing the trust mechanisms to log the user out of the second one of the two systems includes clearing cookies and/or tokens of the second system from the user browser. In some embodiments, utilizing the trust mechanisms to log the user out of the second one of the two systems includes logging the user out of applications of the second system. In some embodiments, utilizing the trust mechanisms to log the user out of the second one of the two systems includes sending a confirmation of logout from the second system to the user browser, the confirmation of logout including the JWT. In some embodiments, utilizing the trust mechanisms to log the user out of the second one of the two systems includes sending the JWT from the user browser to the first system as confirmation of completion of the logout from the second system. In some embodiments, the method includes logging out other applications of the first system via communication of a front channel logout URL.

The first one of the two systems is a role-based access control (RBAC) system. The second one of the two systems is an attribute-based access control (ABAC) system. The first one of the two systems identifies other applications of the first system to which the user is logged in, and logs the user out of those other applications. In some embodiments, the second one of the two systems identifies other applications of the second system to which the user is logged in, receives front channel logout URLs for the other applications of the second system to which the user is logged in, and directs loading of the front channel logout URLs by the other applications of the second system to which the user is logged in.

One aspect relates to a system as set forth in the appended claims including a first access control system having a first login protocol, and a second access control system having a second login protocol independent of the first login protocol. The first access control system includes at least one first processor, and a memory including a plurality of instructions executable by the at least one first processor. The first access control system can receive a logout request from a user at the first access control system, logging the user out of the first access control system, and utilizing a trust mechanism to log the user out of the second access control system.

In some embodiments, the logout request directs the logging out of the user from the first access control system. In some embodiments, logging the user out of the first access control system includes expiring a session of the user on the first access control system. In some embodiments, utilizing the trust mechanisms to log the user out of the second access control system includes redirecting the user to the second access control system. In some embodiments, utilizing the trust mechanisms to log the user out of the second access control system includes sending a JSON web token (JWT) from the user browser to the second access control system.

One aspect relates to a non-transitory computer-readable storage medium as set forth in the appended claims storing a plurality of instructions executable by one or more processors. The plurality of instructions when executed by the one or more processors cause the one or more processors to receive a logout request from a user at a first one of two systems, log the user out of the first one of the two systems, and utilize a trust mechanism to log the user out of the second one of the two systems.

### BRIEF DESCRIPTION OF THE DRAWINGS

FIG. 1 is a simplified block diagram of a distributed multi-region environment incorporating an exemplary embodiment.
FIG. 2 is a schematic illustration of one embodiment of the system for integrated identity management.
FIG. 3 is a flowchart illustrating one embodiment of a process for single logout.
FIG. 4 is a flowchart illustrating another embodiment of a process for single logout.
FIG. 5 is a block diagram illustrating one pattern for implementing a cloud infrastructure as a service system, according to at least one embodiment.
FIG. 6 is a block diagram illustrating another pattern for implementing a cloud infrastructure as a service system, according to at least one embodiment.
FIG. 7 is a block diagram illustrating another pattern for implementing a cloud infrastructure as a service system, according to at least one embodiment.
FIG. 8 is a block diagram illustrating another pattern for implementing a cloud infrastructure as a service system, according to at least one embodiment.
FIG. 9 is a block diagram illustrating an example computer system, according to at least one embodiment.

### DETAILED DESCRIPTION

In the following description, for the purposes of explanation, specific details are set forth in order to provide a thorough understanding of certain embodiments. However, it will be apparent that various embodiments may be practiced without these specific details. The figures and description are not intended to be restrictive. The word "exemplary" is used herein to mean "serving as an example, instance, or illustration." Any embodiment or design described herein as "exemplary" is not necessarily to be construed as preferred or advantageous over other embodiments or designs.

The present disclosure relates generally to cloud computing, and specifically relates to logout to independently authenticated systems, and more specifically relates to a single logout to independently authenticated systems.

A CSP provides the infrastructure and resources that are used for providing cloud services to subscribing customers. The CSP-provided resources can include hardware and software resources. These resources can include, for example, compute resources (e.g., computer systems, virtual machines, containers, applications, processors), memory resources (e.g., databases, data stores), networking resources (e.g., routers, load balancers), identity and access management resources, and other resources. The resources provided by a CSP for providing a set of cloud services to subscribing customers are typically organized into data centers, each data center comprising one or more computing systems or host machines. A data center may be configured to provide a particular set of cloud services. The CSP is responsible for equipping and configuring the data center with compute, memory, and networking and resources that are used to provide that particular set of cloud services. A CSP may provide one or more data centers depending upon the number of subscribing customers and based upon the locations of the customers.

Data centers provided by a CSP may be hosted in different geographical regions. A region may refer to a particular geographic area and may be identified by a region name. Regions are generally independent of each other and can be separated by vast distances, such as across countries or even continents. Examples of regions for a CSP may include US West, US East, Australia East, Australia Southeast, and the like. In certain implementations, a collection of regions is referred to as a realm. A realm can include one or more regions. Accordingly, a CSP may provide a realm comprising one or more regions, with each region including one or more data centers.

Each data center is thus associated with a region. A CSP may deploy one or more data centers in a region, where the data centers are located within some certain geographic area (e.g., a city) within the region. For example, a particular CSP may have multiple regions such as US West region, US East region, Australia East region, Australia Southeast region, and the like. The CSP may deploy one or more data centers in each region, such as in a city within the region. For example, one or more data centers for the US West region may be located in San Jose, California; data centers for the US East region may be located in Ashburn, Virginia; one or more data centers for the Australia East region may be located in Sydney, Australia; one or more data centers for the Australia Southeast region may be located in Melbourne, Australia; and the like. The data centers in two different regions may provide the same or a different set of cloud services and resources to subscribing customers.

In certain implementations, in order to provide high availability to customers and for disaster recovery purposes, data centers within a region may further be organized into one or more availability domains, with an availability domain including one or more data centers. Availability domains within a region are isolated from each other, are made fault tolerant, and are architected in such a way that data centers in multiple availability domains in a region are very unlikely to fail simultaneously. For example, the availability domains within a region may be structured such that a failure at one availability domain within the region is unlikely to impact the availability of data centers in other availability domains within the same region.

A cloud service provider (CSP) may provide multiple cloud services to subscribing customers. These services may be provided under different models including a Software-as-a-Service (SaaS), Platform-as-a-Service (PaaS), an Infrastructure-as-a-Service (IaaS) model, and others.

In the cloud environment, an identity management system is generally provided by the CSP to control user access to resources provided or used by a cloud service. Typical services or functions provided by an identity management system include, without restriction, single sign-on capabilities for users, authentication and authorization services, and other identity-based services.

The resources that are protected by an identity management system can be of different types such as compute instances, block storage volumes, virtual cloud networks (VCNs), subnets, route tables, various callable APIs, internal or legacy applications, and the like. These resources include resources stored in the cloud and/or customer on-premise resources. Each resource is typically identified by a unique identifier (e.g., an ID) that is assigned to the resource when the resource is created.

A CSP may provide two or more separate and independent identity management systems for their cloud offerings. This may be done, for example, where a first identity management system or platform (e.g., Infrastructure Identity and Access Management (IAM)) may be provided for controlling access to cloud resources for IaaS applications and services provided by the CSP. Separately, a second identity management system or platform (e.g., Identity Cloud Services (IDCS)) may be provided for security and identity management for SaaS and PaaS services provided by the CSP.

As a result of providing such two separate platforms, if a customer of the CSP subscribes to both a SaaS or PaaS service and an IaaS service provided by the CSP, the customer currently has two separate accounts--one account with IAM for the IaaS subscription and a separate account with IDCS for the PaaS/SaaS subscription. Each account has its own credentials, such as user login, password, etc. The same customer thus has two separate sets of credentials. This results in an unsatisfactory customer experience and potentially an increase security risks as customers have to maintain two different sets of credentials and as credentials are maintained in two systems. Additionally, having two separate identity management system also creates obstacles for interactions between SaaS/PaaS and IaaS services.

For purposes of this application, and as examples, the two platforms will be referred to as IAM and IDCS. These names and terms are not intended to be limiting in any manner. The disclosure described herein applies to any two (or more) identity management systems that are to be integrated. The identity management systems or platforms may be provided by one or more CSPs.

In certain embodiments, an integrated identity management platform is provided that integrates the multiple identity management platforms (e.g., IAM and IDCS platforms) provided by the CSP in a manner that is transparent to the users or customers of the cloud services while retaining and offering the various features and functionalities offered by the two separate (e.g., IAM and IDCS) platforms. The integration thus provides a more seamless and enhanced user experience.

However, this integration is technically very difficult because the two platforms may use different procedures and protocols for implementing the identity-related functions. IAM may, for example, be an attribute-based access control (ABAC) system, also known as policy-based access control system, which defines an access control paradigm whereby access rights are granted to users through the use of policies that express a complex Boolean rule set that can evaluate many different attributes. The purpose of ABAC is to protect objects such as data, network devices, and IT resources from unauthorized users and actions-those that don't have "approved" characteristics as defined by an organization's security policies. On the other hand IDCS may be a role-based access control (RBAC) system which is a policy-neutral access-control mechanism defined around roles and privileges. The components of RBAC such as role-permissions, user-role and role-role relationships make it simple to perform user assignments. As yet another example, authentication and authorization frameworks or workflows (e.g., types of tokens that are used, different authentication frameworks such as OAUTH, etc.) used by the two platforms may be different. Accordingly, providing an integrated solution is technically very difficult.

Once the user is signed-on to IAM and IDCS, further problems can arise relating to signing off from these multiple systems. To solve this problem, a single logout is developed. Although users may be logged in to multiple applications, single logout logs the user out of all of those applications. This is achieved by the user directly logging the user out with the IDCS and utilizing trust mechanisms in the form of tokens to log out of IAM.

Depending on whether the user attempts to logout via an IAM application or an IDCS application, the back end workflow changes, but the user experience stays the same
The term "data center," as used in this disclosure, refers to one or more computer systems that together are used to implement the data center. For example, a home region data center refers to one or more computer systems that are used to implement a data center in a home region. For example, a global region data center refers to one or more computer systems used to implement the global region data center. A computer system that makes up a data center can include one or more processors, and one or more memories capable of storing instructions that are executed by the one or more processors. An example of such a computer system is depicted in FIG. 11 and described below.

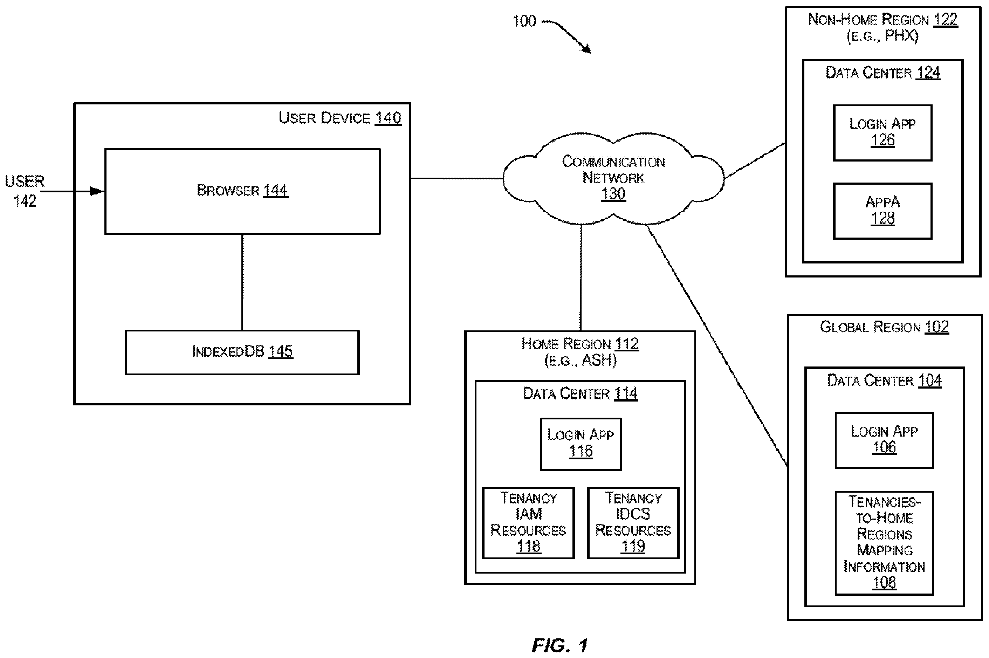

FIG. 1 is a simplified block diagram of a distributed multi-region environment 100 incorporating an exemplary embodiment. Distributed environment 100 depicts data centers in multiple regions that are communicatively coupled to each other via communication network 130. For sake of example, the regions depicted in FIG. 1 include a global region 102, a region 112 that is a home region for a particular tenancy, and a region 122 that is a non-home region for that tenancy (i.e., a region that is not the home region for the tenancy). For purposes of describing various features, it is assumed that non-home region 122 is Phoenix, USA, (identified by label "PHX"), and home region 112 is Ashburn, USA (identified by label "ASH").

Each of the regions depicted in FIG. 1 may include one or more data centers comprising infrastructure provided by a CSP for providing one or more cloud services on a subscription basis to subscribing customers. The infrastructure in a data center may include compute, memory, and networking resources provided by the CSP. For example, in FIG. 1, global region 102 includes a data center 104 (also referred to as global region data center 104), home region 112 includes a data center 114 (also referred to as home region data center 114), and non-home region 122 includes a data center 124 (also referred to as non-home region data center 124).

The data centers in the various regions may be communicatively coupled with one another and to user device 140 via communication network 130 that facilitates communications between the various computing systems. Communication network 130 can be of various types and can include one or more communication networks such as one or more public networks. Examples of communication network 130 include, without restriction, the Internet, a wide area network (WAN), a local area network (LAN), an Ethernet network, a wired network, a wireless network, and the like, and combinations thereof. Different communication protocols may be used to facilitate communications over communication network 130 including both wired and wireless protocols such as IEEE 802.XX suite of protocols, TCP/IP, IPX, SAN, AppleTalk^{®}, Bluetooth^{®}, and various other protocols. In general, communication network 130 may include any infrastructure that facilitates communications between the various systems depicted in FIG. 1.

In the embodiment depicted in FIG. 1, each data center hosts an identity and access management (IAM) application (referred as to as a login application in FIG. 1) that is configured to perform identity and access management functions such as login processing, sessions creation, authentication/authorization operations, and the like. In FIG. 1, global region data center 104 includes a login application 106 (also referred to as a global login application 106), home region data center 114 includes a login application 116 (also referred to as home region login application 116), and non-home region data center 124 includes a login application 126.

As described above, when a tenancy account is opened for a customer, a home region is associated with that tenancy. Typically, the identity and access management (IAM) artifacts configured for that tenancy are stored in a data center in the home region for that tenancy. These IAM artifacts may include, for example, login credentials, certificates, keys, etc. These artifacts are then used, for example, for performing login processing when creating a new session, authentication or authorization functions, and other identity and access management related functions for that tenancy. For example, when a user associated with a tenancy requests access to a protected resource, processing to enable the user to access the resource may involve processing (e.g., tenancy login processing and session creation) that may be performed using the IAM artifacts configured for that tenancy and which are stored in a home region data center in the home region for the tenancy.

In FIG. 1, it is assumed that region 112 is the home region for a tenancy T1, and thus IAM resources 118 and/or IDCS resources 119 for tenancy T1 are stored by home region data center 114. A region in a realm can be the home region for multiple tenancies. Also, within a realm, one region can be the home region for a first tenancy, a second different region can be the home region for a second tenancy, and so on. As previously indicated, in general, IAM artifacts and resources and/or IDCS artifacts and resources for a tenancy are stored in a data center in a home region associated with that tenancy.

In certain implementations, tenancies-to-home regions mapping information is used to map tenancies to their corresponding home regions. The tenancies-to-home regions mapping information may identify home regions and home region data centers for different tenancies. In some embodiments, any region can be the global region, and thus all regions can include information relating to tenancies-to-home region mapping. In the embodiment of FIG. 1, tenancies-to-home regions mapping information 108 is shown as being stored by global region data center 104 and not by the other data centers depicted in FIG. 1.

One or more resources (e.g., applications) may be hosted by the different data centers. These applications may be used by users associated with customers that have subscribed to one or more cloud services provided by a CSP. For example, in FIG. 1, an application "AppA" 128 is deployed at non-home region data center 124 in region 122. For purposes of the example depicted in FIG. 1, it is assumed that region 122 is a non-home region with respect to tenancy T1.

A user 142 associated with a customer tenancy can access one or more services or resources (e.g., AppA 128) provided by the various data centers depicted in FIG. 1 via a user device 140. User device 140 could be a computing device such as a laptop, a desktop, a mobile device, and the like. There are various ways in which a user, such as user 142, can access a resource, such as AppA 128. In certain use cases, user 142 may use an application (e.g., a browser) executing on user device 140 to access the resource. For example, in FIG. 1, user 142 can use a browser 144 to access AppA 128. User 142 may access AppA 128 by providing an URL endpoint corresponding to AppA 128 to browser 144, by click a link corresponding to AppA 128, and the like. API calls may also be made to access AppA 128.

AppA 128 may be a "protected" resource, where access to AppA 128 is controlled by an IAM application. A user, such as user 142, associated with a customer tenancy is typically identified by a user account or a user principal associated with the user. User 142 can access a protected resource, such as AppA 128, through this user account or user principal.

Browser 144 may be of different types. Commonly used browsers include Google Chrome, Mozilla Firefox, Microsoft Edge. Internet Explorer, Apple Safari, and others. Certain browser implementations may have an associated storage capability. For example, browser 144 has an in-browser storage represented by database 145. Information related to the various endpoints accessed using browser 144 or applications accessed using browser 144 may be stored in database 145 on user device 140 (referred to as client-side storage since saved on the user device).

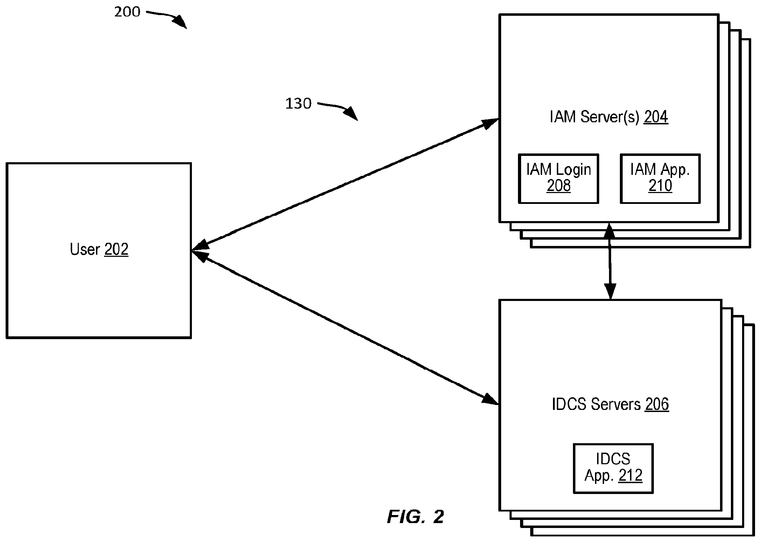

With reference now to FIG. 2, a schematic illustration of one embodiment of the system for integrated identity management 200, also referred to herein as an integrated identity management platform 200 is shown. The system 200 includes a user device 202, which can be user device 140, one or several IAM servers 204, and one or several IDCS servers 206. In some embodiments, the user device 202 can comprise a computing device such as a laptop, a desktop, a mobile device, and the like. The one or several IAM servers 204 and/or the one or several IDCS servers 206 can each comprise one or several computing resources including, for example, one or several servers or server racks. The one or several IAM server 204 and/or the one or several ICDS servers 206 can be located in one or several of the global region 102, the home region 112, and/or the non-home region 122.

One of several of the IAM servers 204 can include an instance of the IAM login 208, also referred to herein as IAM logout 208. In some embodiments, an instance of IAM login 208 can interact with the user during all or portions of the login and/or logout process. These instances can include, for example, a local instance, a global instance, and/or a home instance. In some embodiments, the local instance can be running on a server in the same region as the server on which the IAM App is running, the global instance can be running on a server comprising a common global endpoint, and home instance can be running in the home region of a tenancy that the user is trying to access.

One of several of the IAM servers 204 can further include an IAM application 210, which can be an application protected by IAM. In some embodiments, the user can login to access the IAM application 210, and, when done with the IAM application 210, can logout.

One or several instances of the IDCS servers 206 can include an IDCS application 212, which can be an application protected by IDCS. In some embodiments, the user can login to access the IDCS application 212, and when done with the IDCS application 212, can logout.

A user can, with user device 202, login via one or several IAM applications 210, or can login via one or several IDCS applications 212. Likewise, a user can logout via one or several IAM applications 210 running on one or several IAM servers 204, or can logout via one or several IDCS applications 212 running on one or several IDCS servers 206.

In some embodiments, the user device 202 can be directly connected with one or both of at least one IAM server 204 and at least one IDCS server 206 via, for example, a wired or wireless connection via, for example, a communication network 130. In some embodiments, the user device 202 can be directly connected with one or both of at least one IAM server 204 and at least one IDCS server 206 via, for example, one or several communication networks and/or one or several computer networks. In some embodiments, the user device 202 can be directly connected with one or both of at least one IAM server 204 and at least one IDCS server 206 via, for example, the internet.

In some embodiments, some or all of the IAM server(s) 204 and the IDCS server(s) 206 can be located at a same location, or at different locations. In some embodiments, some or all of the IAM server(s) 204 and the IDCS server(s) 206 can be located in different computing networks, different data centers, different regions, or the like. In some embodiments, and applying single logout between independent systems as disclosed herein, when a user logs out of one of the IAM server(s) 204 and the IDCS server(s) 206, the user is automatically logged out of the other of the IAM server(s) or the IDCS server(s) 206.

In some embodiments, the method can include receiving a logout request from a user at a first one of two systems. These two systems can include, for example, IAM or IDCS. In some embodiments, the logout request can be received from the user via a protected application, such as, for example, a IAM protected application, or an IDCS protected application. The method can include logging the user out of the first one of the two systems, and then utilizing a trust mechanism to log the user out of the second one of the two systems. The trust mechanism can include at least one token.

In some embodiments, the method can include receiving a logout request from a user. This logout request can direct the logging out of the user from a first one of two systems. These two systems can include, for example, IAM or IDCS. The method can include expiring a session of the user on the first system and redirecting the user to a second system. Thus, in some embodiments, a session can be expired on one of IAM and IDCS, and then the user can be redirected to the other of IAM and IDCS. The method can include sending a JSON web token (JWT) from the user browser to the second system and clearing cookies and/or tokens of the second system from the user browser. The user can be logged out of applications of the second system, and confirmation of logout from the second system can be sent from the second system to the user browser. This confirmation of logout can include the JWT, and sending the JWT from the user browser to the first system as confirmation of completion of the logout from the second system. In some embodiments, the JWT includes a post logout redirect URL. The method can include logging out other applications of the first system via communication of a front channel logout URL.

In some embodiments, the first one of the two systems comprises an attribute-based access control (ABAC) system, and the second one of the two systems comprises a role-based access control (RBAC) system. In some embodiments, the first one of the two systems comprises a role-based access control (RBAC) system, and wherein the second one of the two systems comprises an attribute-based access control (ABAC) system. In some embodiments, the first one of the two systems identifies other applications of the first system to which the user is logged in, and logs the user out of those other applications. In some embodiments, the second one of the two systems identifies other applications of the second system to which the user is logged in, receives front channel logout URLs for the other applications of the second system to which the user is logged in, and directs loading of the front channel logout URLs by the other applications of the second system to which the user is logged in.

### From an IAM Application

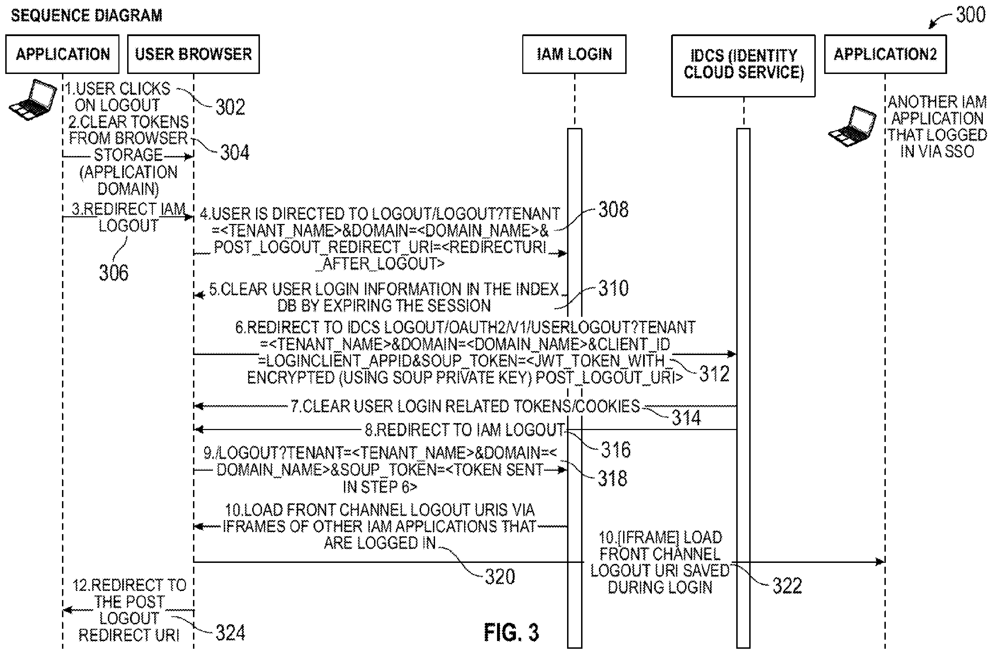

With reference now to FIG. 3, a flowchart illustrating one embodiment of a process 300 for single logout is shown. The process 300 can be performed by all or portions of system 200. The process 300 begins when the user 142, via the user device 140 and from an IAM protected application 210 selects to logout as indicated in step 402. In some embodiments, a user can select to logout via manipulation of feature within the user interface such as, for example, via manipulation of a logout button and/or via pressing of one or several keys directing logout. The user can select logout in and/or from within the IAM protected application.

At step 304, tokens are cleared from the browser storage in the application domain. In some embodiments, these tokens are cleared by the user browser in response to the user selecting to logout. These tokens can, in some embodiments, be tokens in the application domain. At step 306, the user browser redirects the user to IAM login, and specifically to an instance of IAM login 208. At step 308, the user is directed to logout at IAM login.

At step 310, the user information in the user browser is cleared in the index database of the user browser, thereby expiring the session. Specifically, IAM login 208 directs the user browser to clear the user information. This can result in the expiring of the session from the IAM login domain in the user browser.

The user browser redirects to IDCS logout at step 312. As part of this redirect, the user browser sends an IAM token, which can be a JSON web token (JWT). This token can include a post logout redirect URL that can be signed using a private key of, for example, the user browser and/or of the IAM login. In some embodiments, this token can ensure trust of the post logout redirect URL as it is stamped by the IAM login.

At step 314, IDCS causes the clearing of login related cookies and/or tokens in the user browser. In some embodiments this can include the clearing of session tokens from the IDCS domain in the user browser. At step 316, IDCS redirects the user browser to IAM logout. This can include sending, from IDCS to the user browser, the next URL to which the user browser should go.

At step 318, the user browser sends the JWT that was previously sent to the IDCS at step 312, to IAM login. This can further include the user browser sending the tenant and/or domain to which the user browser has logged in to to the IDCS. IAM login recognizes the JWT and trusts the redirect request. At step 320, the IAM login directs the user browser to load front channel logout URLs. These front channels can be loaded via iframes of other IAM applications that are logged in. In some embodiments, the iframe can load the front channel logout URLs of other applications to which the user and/or the user browser has logged in to. At step 322, the user browser directs other applications to load the front channel logout URL. In some embodiments, the front channel logout URL can be saved during login. At step 324, the user browser redirects to the post logout redirect URL contained within the JWT.

### Logout from IDCS-Side Application

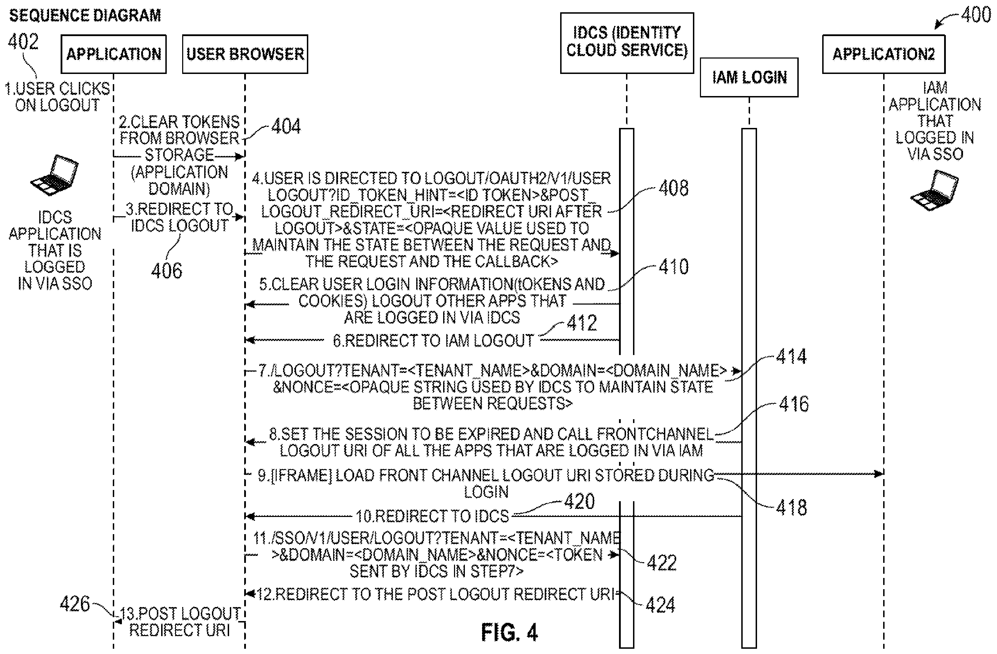

With reference now to FIG. 4, a flowchart illustrating one embodiment of a process 400 for single logout is shown. The process 400 can be performed by all or portions of system 200. The process 400 is performed to initiate logout from an IDCS protected application 212, which logout can then be propagated to other systems, and specifically to any IAM applications 210 to which the user is logged in.

The process 400 begins when the user 142, via the user device 140 and from an IDCS protected application 212 selects to logout as indicated in step 402. In some embodiments, a user can select to logout via manipulation of feature within the user interface such as, for example, via manipulation of a logout button and/or via pressing of one or several keys directing logout. The user can select logout in and/or from within the IAM protected application.

At step 404, tokens are cleared from the browser storage in the application domain. In some embodiments, these tokens are cleared by the user browser in response to the user selecting to logout. These tokens can, in some embodiments, be tokens in the application domain. At step 406, the browser redirects to IDCS logout. At step 408, the user is directed to logout at IDCS. This can include initiating an Oauth protocol between the user browser and IDCS logout and/or transmitting a token from the user browser to IDCS logout. This token can be a JWT token that can, for example, include a post logout redirect URL. In some embodiments, the JWT can include a value, which can be an opaque value that can maintain the state between the request and the callback.

At step 410, the user information in the user browser is cleared in the index database of the user browser, thereby expiring the session. This can include, for example, clearing tokens and/or cookies that may be stored by the user browser. In some embodiments, this step can further include logging the user out of any other IDCS protected applications 212 to which the user is logged in to. In some embodiments, this can include the IDCS logout determining if the user is logged in to any other IDCS protected applications 212, and if any other logged in IDCS protected applications 212 are identified, then the user is logged out of those other IDCS protected applications 212.

IDCS logout redirects the user browser to IAM logout at step 412. As part of this redirect, the user browser sends a token, which can be a JSON web token (JWT). In some embodiments, the JWT can be signed by the IDCS private key. In some embodiments, this JWT can be sent to allow the IDCS to be verified. Specifically, the user browser send the JWT token to the IAM logout so that when IAM login redirects to IDCS, IDCS can send the JWT back to the user browser to allow IDCS to be verified. At step 414, a logout request is sent to IAM login, which can include information identifying the tenant, the domain, or the like. In some embodiments, the JWT can also be set to IAM login. The logout request can be sent from the user browser to the IAM login. In some embodiments, the logout request can further include the opaque value and/or string used to maintain state between requests. In some embodiments, this logout request can include a token, which can contain, for example, the opaque value and/or string. At step 416, IAM login directs the user browser to set the session to be expired and the front channel logout URL of all apps logged in via IAM are called. In some embodiments, this can include identifying IAM protected applications to which the user is logged in, and/or this can include querying front channel logout URLs from a data repository and/or database in which they are stored. In response to which request the front channel logout URLs of the IAM applications to which the user is logged in can be retrieved and provided.

At step 418, the front channel logout URLs stored during login are loaded. This can, in some embodiments, include loading the retrieved and provided front channel logout URLs. At step 420, IAM login redirects the user browser to IDCS. At step 422, the user browser sends the token and causes the clearing of login related cookies at tokens in the user browser. In some embodiments, this can include the browser sending the JWT from step 414, and originally sent in step 408 to IDCS login. In some embodiments, the sending of the JWT and the use of the JWT to validate identity can provide a secure way of communicating the requests and ensuring that communication information is not manipulated. IDCS login can, based on the received token, trust the successful logout of the IAM, and can redirect the user browser to the post logout redirect URL as indicated in step 424. In some embodiments, the post logout redirect URL can be, for example, contained in the token. At step 426, the post logout redirect URL is provided from the browser to the user application.

### Exemplary Embodiment

As noted above, infrastructure as a service (IaaS) is one particular type of cloud computing. IaaS can be configured to provide virtualized computing resources over a public network (e.g., the Internet). In an IaaS model, a cloud computing provider can host the infrastructure components (e.g., servers, storage devices, network nodes (e.g., hardware), deployment software, platform virtualization (e.g., a hypervisor layer), or the like). In some cases, an IaaS provider may also supply a variety of services to accompany those infrastructure components (e.g., billing, monitoring, logging, load balancing and clustering, etc.). Thus, as these services may be policy-driven, IaaS users may be able to implement policies to drive load balancing to maintain application availability and performance.

In some instances, IaaS customers may access resources and services through a wide area network (WAN), such as the Internet, and can use the cloud provider's services to install the remaining elements of an application stack. For example, the user can log in to the IaaS platform to create virtual machines (VMs), install operating systems (OSs) on each VM, deploy middleware such as databases, create storage buckets for workloads and backups, and even install enterprise software into that VM. Customers can then use the provider's services to perform various functions, including balancing network traffic, troubleshooting application issues, monitoring performance, managing disaster recovery, etc.

In most cases, a cloud computing model will require the participation of a cloud provider. The cloud provider may, but need not be, a third-party service that specializes in providing (e.g., offering, renting, selling) IaaS. An entity might also opt to deploy a private cloud, becoming its own provider of infrastructure services.

In some examples, IaaS deployment is the process of putting a new application, or a new version of an application, onto a prepared application server or the like. It may also include the process of preparing the server (e.g., installing libraries, daemons, etc.). This is often managed by the cloud provider, below the hypervisor layer (e.g., the servers, storage, network hardware, and virtualization). Thus, the customer may be responsible for handling (OS), middleware, and/or application deployment (e.g., on self-service virtual machines (e.g., that can be spun up on demand) or the like.

In some examples, IaaS provisioning may refer to acquiring computers or virtual hosts for use, and even installing needed libraries or services on them. In most cases, deployment does not include provisioning, and the provisioning may need to be performed first.

In some cases, there are two different challenges for IaaS provisioning. First, there is the initial challenge of provisioning the initial set of infrastructure before anything is running. Second, there is the challenge of evolving the existing infrastructure (e.g., adding new services, changing services, removing services, etc.) once everything has been provisioned. In some cases, these two challenges may be addressed by enabling the configuration of the infrastructure to be defined declaratively. In other words, the infrastructure (e.g., what components are needed and how they interact) can be defined by one or more configuration files. Thus, the overall topology of the infrastructure (e.g., what resources depend on which, and how they each work together) can be described declaratively. In some instances, once the topology is defined, a workflow can be generated that creates and/or manages the different components described in the configuration files.

In some examples, an infrastructure may have many interconnected elements. For example, there may be one or more virtual private clouds (VPCs) (e.g., a potentially on-demand pool of configurable and/or shared computing resources), also known as a core network. In some examples, there may also be one or more inbound/outbound traffic group rules provisioned to define how the inbound and/or outbound traffic of the network will be set up and one or more virtual machines (VMs). Other infrastructure elements may also be provisioned, such as a load balancer, a database, or the like. As more and more infrastructure elements are desired and/or added, the infrastructure may incrementally evolve.

In some instances, continuous deployment techniques may be employed to enable deployment of infrastructure code across various virtual computing environments. Additionally, the described techniques can enable infrastructure management within these environments. In some examples, service teams can write code that is desired to be deployed to one or more, but often many, different production environments (e.g., across various different geographic locations, sometimes spanning the entire world). However, in some examples, the infrastructure on which the code will be deployed must first be set up. In some instances, the provisioning can be done manually, a provisioning tool may be utilized to provision the resources, and/or deployment tools may be utilized to deploy the code once the infrastructure is provisioned.

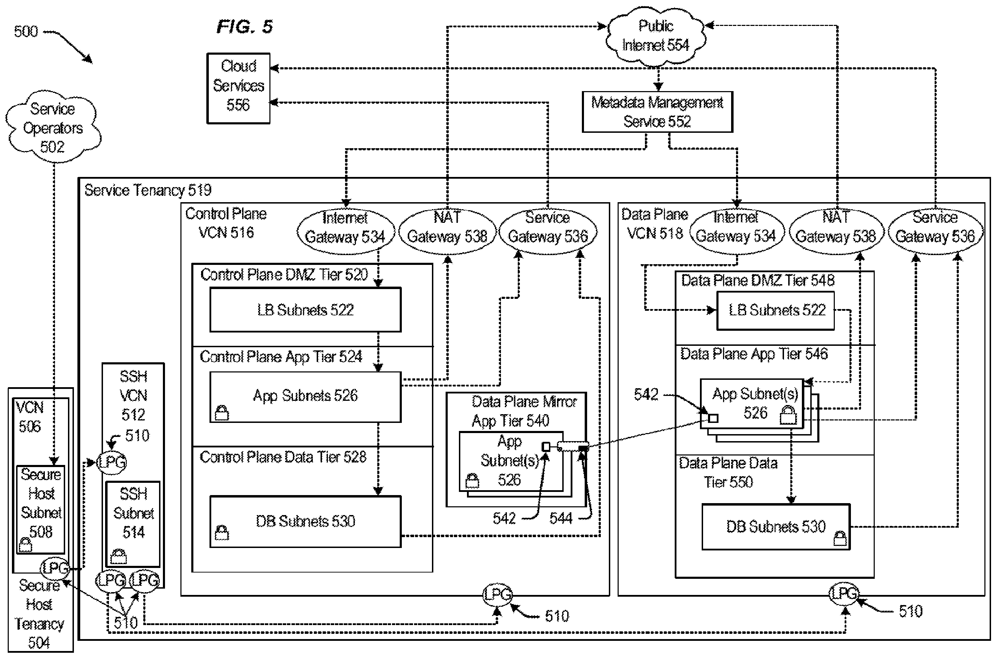

FIG. 5 is a block diagram 500 illustrating an example pattern of an IaaS architecture, according to at least one embodiment. Service operators 502 can be communicatively coupled to a secure host tenancy 504 that can include a virtual cloud network (VCN) 506 and a secure host subnet 508. In some examples, the service operators 502 may be using one or more client computing devices, which may be portable handheld devices (e.g., an iPhone^{®}, cellular telephone, an iPad^{®}, computing tablet, a personal digital assistant (PDA)) or wearable devices (e.g., a Google Glass^{®} head mounted display), running software such as Microsoft Windows Mobile^{®}, and/or a variety of mobile operating systems such as iOS, Windows Phone, Android, BlackBerry 8, Palm OS, and the like, and being Internet, e-mail, short message service (SMS), Blackberry^{®}, or other communication protocol enabled. Alternatively, the client computing devices can be general purpose personal computers including, by way of example, personal computers and/or laptop computers running various versions of Microsoft Windows^{®}, Apple Macintosh^{®}, and/or Linux operating systems. The client computing devices can be workstation computers running any of a variety of commercially-available UNIX^{®} or UNIX-like operating systems, including without limitation the variety of GNU/Linux operating systems, such as for example, Google Chrome OS. Alternatively, or in addition, client computing devices may be any other electronic device, such as a thin-client computer, an Internet-enabled gaming system (e.g., a Microsoft Xbox gaming console with or without a Kinect^{®} gesture input device), and/or a personal messaging device, capable of communicating over a network that can access the VCN 506 and/or the Internet.

The VCN 506 can include a local peering gateway (LPG) 510 that can be communicatively coupled to a secure shell (SSH) VCN 512 via an LPG 510 contained in the SSH VCN 512. The SSH VCN 512 can include an SSH subnet 514, and the SSH VCN 512 can be communicatively coupled to a control plane VCN 516 via the LPG 510 contained in the control plane VCN 516. Also, the SSH VCN 512 can be communicatively coupled to a data plane VCN 518 via an LPG 510. The control plane VCN 516 and the data plane VCN 518 can be contained in a service tenancy 519 that can be owned and/or operated by the IaaS provider.

The control plane VCN 516 can include a control plane demilitarized zone (DMZ) tier 520 that acts as a perimeter network (e.g., portions of a corporate network between the corporate intranet and external networks). The DMZ-based servers may have restricted responsibilities and help keep breaches contained. Additionally, the DMZ tier 520 can include one or more load balancer (LB) subnet(s) 522, a control plane app tier 524 that can include app subnet(s) 526, a control plane data tier 528 that can include database (DB) subnet(s) 530 (e.g., frontend DB subnet(s) and/or backend DB subnet(s)). The LB subnet(s) 522 contained in the control plane DMZ tier 520 can be communicatively coupled to the app subnet(s) 526 contained in the control plane app tier 524 and an Internet gateway 534 that can be contained in the control plane VCN 516, and the app subnet(s) 526 can be communicatively coupled to the DB subnet(s) 530 contained in the control plane data tier 528 and a service gateway 536 and a network address translation (NAT) gateway 538. The control plane VCN 516 can include the service gateway 536 and the NAT gateway 538.

The control plane VCN 516 can include a data plane mirror app tier 540 that can include app subnet(s) 526. The app subnet(s) 526 contained in the data plane mirror app tier 540 can include a virtual network interface controller (VNIC) 542 that can execute a compute instance 544. The compute instance 544 can communicatively couple the app subnet(s) 526 of the data plane mirror app tier 540 to app subnet(s) 526 that can be contained in a data plane app tier 546.

The data plane VCN 518 can include the data plane app tier 546, a data plane DMZ tier 548, and a data plane data tier 550. The data plane DMZ tier 548 can include LB subnet(s) 522 that can be communicatively coupled to the app subnet(s) 526 of the data plane app tier 546 and the Internet gateway 534 of the data plane VCN 518. The app subnet(s) 526 can be communicatively coupled to the service gateway 536 of the data plane VCN 518 and the NAT gateway 538 of the data plane VCN 518. The data plane data tier 550 can also include the DB subnet(s) 530 that can be communicatively coupled to the app subnet(s) 526 of the data plane app tier 546.

The Internet gateway 534 of the control plane VCN 516 and of the data plane VCN 518 can be communicatively coupled to a metadata management service 552 that can be communicatively coupled to public Internet 554. Public Internet 554 can be communicatively coupled to the NAT gateway 538 of the control plane VCN 516 and of the data plane VCN 518. The service gateway 536 of the control plane VCN 516 and of the data plane VCN 518 can be communicatively couple to cloud services 556.

In some examples, the service gateway 536 of the control plane VCN 516 or of the data plane VCN 518 can make application programming interface (API) calls to cloud services 556 without going through public Internet 554. The API calls to cloud services 556 from the service gateway 536 can be one-way: the service gateway 536 can make API calls to cloud services 556, and cloud services 556 can send requested data to the service gateway 536. But, cloud services 556 may not initiate API calls to the service gateway 536.

In some examples, the secure host tenancy 504 can be directly connected to the service tenancy 519, which may be otherwise isolated. The secure host subnet 508 can communicate with the SSH subnet 514 through an LPG 510 that may enable two-way communication over an otherwise isolated system. Connecting the secure host subnet 508 to the SSH subnet 514 may give the secure host subnet 508 access to other entities within the service tenancy 519.

The control plane VCN 516 may allow users of the service tenancy 519 to set up or otherwise provision desired resources. Desired resources provisioned in the control plane VCN 516 may be deployed or otherwise used in the data plane VCN 518. In some examples, the control plane VCN 516 can be isolated from the data plane VCN 518, and the data plane mirror app tier 540 of the control plane VCN 516 can communicate with the data plane app tier 546 of the data plane VCN 518 via VNICs 542 that can be contained in the data plane mirror app tier 540 and the data plane app tier 546.

In some examples, users of the system, or customers, can make requests, for example create, read, update, or delete (CRUD) operations, through public Internet 554 that can communicate the requests to the metadata management service 552. The metadata management service 552 can communicate the request to the control plane VCN 516 through the Internet gateway 534. The request can be received by the LB subnet(s) 522 contained in the control plane DMZ tier 520. The LB subnet(s) 522 may determine that the request is valid, and in response to this determination, the LB subnet(s) 522 can transmit the request to app subnet(s) 526 contained in the control plane app tier 524. If the request is validated and requires a call to public Internet 554, the call to public Internet 554 may be transmitted to the NAT gateway 538 that can make the call to public Internet 554. Metadata that may be desired to be stored by the request can be stored in the DB subnet(s) 530.

In some examples, the data plane mirror app tier 540 can facilitate direct communication between the control plane VCN 516 and the data plane VCN 518. For example, changes, updates, or other suitable modifications to configuration may be desired to be applied to the resources contained in the data plane VCN 518. Via a VNIC 542, the control plane VCN 516 can directly communicate with, and can thereby execute the changes, updates, or other suitable modifications to configuration to, resources contained in the data plane VCN 518.

In some embodiments, the control plane VCN 516 and the data plane VCN 518 can be contained in the service tenancy 519. In this case, the user, or the customer, of the system may not own or operate either the control plane VCN 516 or the data plane VCN 518. Instead, the IaaS provider may own or operate the control plane VCN 516 and the data plane VCN 518, both of which may be contained in the service tenancy 519. This embodiment can enable isolation of networks that may prevent users or customers from interacting with other users', or other customers', resources. Also, this embodiment may allow users or customers of the system to store databases privately without needing to rely on public Internet 554, which may not have a desired level of threat prevention, for storage.

In other embodiments, the LB subnet(s) 522 contained in the control plane VCN 516 can be configured to receive a signal from the service gateway 536. In this embodiment, the control plane VCN 516 and the data plane VCN 518 may be configured to be called by a customer of the IaaS provider without calling public Internet 554. Customers of the IaaS provider may desire this embodiment since database(s) that the customers use may be controlled by the IaaS provider and may be stored on the service tenancy 519, which may be isolated from public Internet 554.

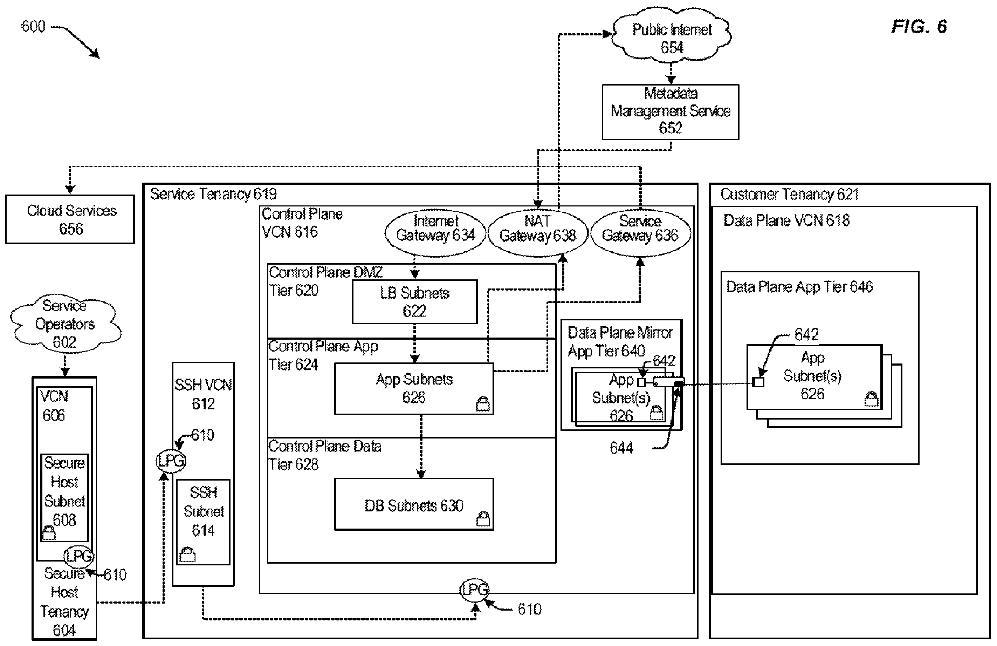

FIG. 6 is a block diagram 600 illustrating another example pattern of an IaaS architecture, according to at least one embodiment. Service operators 602 (e.g., service operators 502 of FIG. 5) can be communicatively coupled to a secure host tenancy 604 (e.g., the secure host tenancy 504 of FIG. 5) that can include a virtual cloud network (VCN) 606 (e.g., the VCN 506 of FIG. 5) and a secure host subnet 608 (e.g., the secure host subnet 508 of FIG. 5). The VCN 606 can include a local peering gateway (LPG) 610 (e.g., the LPG 510 of FIG. 5) that can be communicatively coupled to a secure shell (SSH) VCN 612 (e.g., the SSH VCN 512 of FIG. 5) via an LPG 510 contained in the SSH VCN 612. The SSH VCN 612 can include an SSH subnet 614 (e.g., the SSH subnet 514 of FIG. 5), and the SSH VCN 612 can be communicatively coupled to a control plane VCN 616 (e.g., the control plane VCN 516 of FIG. 5) via an LPG 610 contained in the control plane VCN 616. The control plane VCN 616 can be contained in a service tenancy 619 (e.g., the service tenancy 519 of FIG. 5), and the data plane VCN 618 (e.g., the data plane VCN 518 of FIG. 5) can be contained in a customer tenancy 621 that may be owned or operated by users, or customers, of the system.

The control plane VCN 616 can include a control plane DMZ tier 620 (e.g., the control plane DMZ tier 520 of FIG. 5) that can include LB subnet(s) 622 (e.g., LB subnet(s) 522 of FIG. 5), a control plane app tier 624 (e.g., the control plane app tier 524 of FIG. 5) that can include app subnet(s) 626 (e.g., app subnet(s) 526 of FIG. 5), a control plane data tier 628 (e.g., the control plane data tier 528 of FIG. 5) that can include database (DB) subnet(s) 630 (e.g., similar to DB subnet(s) 530 of FIG. 5). The LB subnet(s) 622 contained in the control plane DMZ tier 620 can be communicatively coupled to the app subnet(s) 626 contained in the control plane app tier 624 and an Internet gateway 634 (e.g., the Internet gateway 534 of FIG. 5) that can be contained in the control plane VCN 616, and the app subnet(s) 626 can be communicatively coupled to the DB subnet(s) 630 contained in the control plane data tier 628 and a service gateway 636 (e.g., the service gateway 536 of FIG. 5) and a network address translation (NAT) gateway 638 (e.g., the NAT gateway 538 of FIG. 5). The control plane VCN 616 can include the service gateway 636 and the NAT gateway 638.

The control plane VCN 616 can include a data plane mirror app tier 640 (e.g., the data plane mirror app tier 540 of FIG. 5) that can include app subnet(s) 626. The app subnet(s) 626 contained in the data plane mirror app tier 640 can include a virtual network interface controller (VNIC) 642 (e.g., the VNIC of 542) that can execute a compute instance 644 (e.g., similar to the compute instance 544 of FIG. 5). The compute instance 644 can facilitate communication between the app subnet(s) 626 of the data plane mirror app tier 640 and the app subnet(s) 626 that can be contained in a data plane app tier 646 (e.g., the data plane app tier 546 of FIG. 5) via the VNIC 642 contained in the data plane mirror app tier 640 and the VNIC 642 contained in the data plane app tier 646.

The Internet gateway 634 contained in the control plane VCN 616 can be communicatively coupled to a metadata management service 652 (e.g., the metadata management service 552 of FIG. 5) that can be communicatively coupled to public Internet 654 (e.g., public Internet 554 of FIG. 5). Public Internet 654 can be communicatively coupled to the NAT gateway 638 contained in the control plane VCN 616. The service gateway 636 contained in the control plane VCN 616 can be communicatively couple to cloud services 656 (e.g., cloud services 556 of FIG. 5).

In some examples, the data plane VCN 618 can be contained in the customer tenancy 621. In this case, the IaaS provider may provide the control plane VCN 616 for each customer, and the IaaS provider may, for each customer, set up a unique compute instance 644 that is contained in the service tenancy 619. Each compute instance 644 may allow communication between the control plane VCN 616, contained in the service tenancy 619, and the data plane VCN 618 that is contained in the customer tenancy 621. The compute instance 644 may allow resources, that are provisioned in the control plane VCN 616 that is contained in the service tenancy 619, to be deployed or otherwise used in the data plane VCN 618 that is contained in the customer tenancy 621.

In other examples, the customer of the IaaS provider may have databases that live in the customer tenancy 621. In this example, the control plane VCN 616 can include the data plane mirror app tier 640 that can include app subnet(s) 626. The data plane mirror app tier 640 can reside in the data plane VCN 618, but the data plane mirror app tier 640 may not live in the data plane VCN 618. That is, the data plane mirror app tier 640 may have access to the customer tenancy 621, but the data plane mirror app tier 640 may not exist in the data plane VCN 618 or be owned or operated by the customer of the IaaS provider. The data plane mirror app tier 640 may be configured to make calls to the data plane VCN 618 but may not be configured to make calls to any entity contained in the control plane VCN 616. The customer may desire to deploy or otherwise use resources in the data plane VCN 618 that are provisioned in the control plane VCN 616, and the data plane mirror app tier 640 can facilitate the desired deployment, or other usage of resources, of the customer.

In some embodiments, the customer of the IaaS provider can apply filters to the data plane VCN 618. In this embodiment, the customer can determine what the data plane VCN 618 can access, and the customer may restrict access to public Internet 654 from the data plane VCN 618. The IaaS provider may not be able to apply filters or otherwise control access of the data plane VCN 618 to any outside networks or databases. Applying filters and controls by the customer onto the data plane VCN 618, contained in the customer tenancy 621, can help isolate the data plane VCN 618 from other customers and from public Internet 654.

In some embodiments, cloud services 656 can be called by the service gateway 636 to access services that may not exist on public Internet 654, on the control plane VCN 616, or on the data plane VCN 618. The connection between cloud services 656 and the control plane VCN 616 or the data plane VCN 618 may not be live or continuous. Cloud services 656 may exist on a different network owned or operated by the IaaS provider. Cloud services 656 may be configured to receive calls from the service gateway 636 and may be configured to not receive calls from public Internet 654. Some cloud services 656 may be isolated from other cloud services 656, and the control plane VCN 616 may be isolated from cloud services 656 that may not be in the same region as the control plane VCN 616. For example, the control plane VCN 616 may be located in "Region 1," and cloud service "Deployment 5," may be located in Region 1 and in "Region 2." If a call to Deployment 5 is made by the service gateway 636 contained in the control plane VCN 616 located in Region 1, the call may be transmitted to Deployment 5 in Region 1. In this example, the control plane VCN 616, or Deployment 5 in Region 1, may not be communicatively coupled to, or otherwise in communication with, Deployment 5 in Region 2.

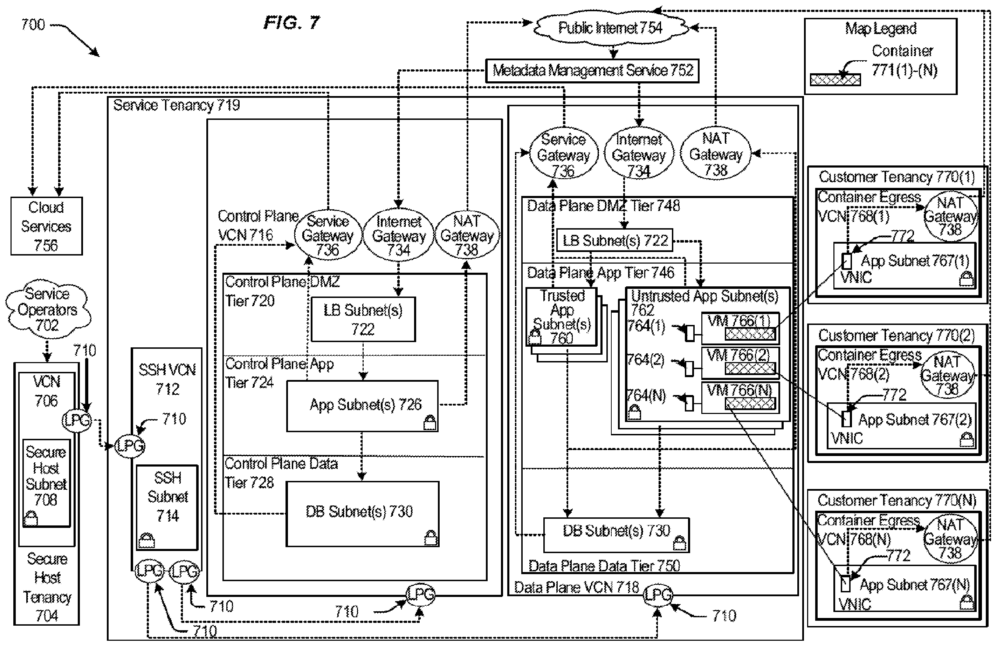

FIG. 7 is a block diagram 700 illustrating another example pattern of an IaaS architecture, according to at least one embodiment. Service operators 702 (e.g., service operators 502 of FIG. 5) can be communicatively coupled to a secure host tenancy 704 (e.g., the secure host tenancy 504 of FIG. 5) that can include a virtual cloud network (VCN) 706 (e.g., the VCN 506 of FIG. 5) and a secure host subnet 708 (e.g., the secure host subnet 508 of FIG. 5). The VCN 706 can include an LPG 710 (e.g., the LPG 510 of FIG. 5) that can be communicatively coupled to an SSH VCN 712 (e.g., the SSH VCN 512 of FIG. 5) via an LPG 710 contained in the SSH VCN 712. The SSH VCN 712 can include an SSH subnet 714 (e.g., the SSH subnet 514 of FIG. 5), and the SSH VCN 712 can be communicatively coupled to a control plane VCN 716 (e.g., the control plane VCN 516 of FIG. 5) via an LPG 710 contained in the control plane VCN 716 and to a data plane VCN 718 (e.g., the data plane 518 of FIG. 5) via an LPG 710 contained in the data plane VCN 718. The control plane VCN 716 and the data plane VCN 718 can be contained in a service tenancy 719 (e.g., the service tenancy 519 of FIG. 5).

The control plane VCN 716 can include a control plane DMZ tier 720 (e.g., the control plane DMZ tier 520 of FIG. 5) that can include load balancer (LB) subnet(s) 722 (e.g., LB subnet(s) 522 of FIG. 5), a control plane app tier 724 (e.g., the control plane app tier 524 of FIG. 5) that can include app subnet(s) 726 (e.g., similar to app subnet(s) 526 of FIG. 5), a control plane data tier 728 (e.g., the control plane data tier 528 of FIG. 5) that can include DB subnet(s) 730. The LB subnet(s) 722 contained in the control plane DMZ tier 720 can be communicatively coupled to the app subnet(s) 726 contained in the control plane app tier 724 and to an Internet gateway 734 (e.g., the Internet gateway 534 of FIG. 5) that can be contained in the control plane VCN 716, and the app subnet(s) 726 can be communicatively coupled to the DB subnet(s) 730 contained in the control plane data tier 728 and to a service gateway 736 (e.g., the service gateway of FIG. 5) and a network address translation (NAT) gateway 738 (e.g., the NAT gateway 538 of FIG. 5). The control plane VCN 716 can include the service gateway 736 and the NAT gateway 738.

The data plane VCN 718 can include a data plane app tier 746 (e.g., the data plane app tier 546 of FIG. 5), a data plane DMZ tier 748 (e.g., the data plane DMZ tier 548 of FIG. 5), and a data plane data tier 750 (e.g., the data plane data tier 550 of FIG. 5). The data plane DMZ tier 748 can include LB subnet(s) 722 that can be communicatively coupled to trusted app subnet(s) 760 and untrusted app subnet(s) 762 of the data plane app tier 746 and the Internet gateway 734 contained in the data plane VCN 718. The trusted app subnet(s) 760 can be communicatively coupled to the service gateway 736 contained in the data plane VCN 718, the NAT gateway 738 contained in the data plane VCN 718, and DB subnet(s) 730 contained in the data plane data tier 750. The untrusted app subnet(s) 762 can be communicatively coupled to the service gateway 736 contained in the data plane VCN 718 and DB subnet(s) 730 contained in the data plane data tier 750. The data plane data tier 750 can include DB subnet(s) 730 that can be communicatively coupled to the service gateway 736 contained in the data plane VCN 718.

The untrusted app subnet(s) 762 can include one or more primary VNICs 764(1)-(N) that can be communicatively coupled to tenant virtual machines (VMs) 766(1)-(N). Each tenant VM 766(1)-(N) can be communicatively coupled to a respective app subnet 767(1)-(N) that can be contained in respective container egress VCNs 768(1)-(N) that can be contained in respective customer tenancies 770(1)-(N). Respective secondary VNICs 772(1)-(N) can facilitate communication between the untrusted app subnet(s) 762 contained in the data plane VCN 718 and the app subnet contained in the container egress VCNs 768(1)-(N). Each container egress VCNs 768(1)-(N) can include a NAT gateway 738 that can be communicatively coupled to public Internet 754 (e.g., public Internet 554 of FIG. 5).

The Internet gateway 734 contained in the control plane VCN 716 and contained in the data plane VCN 718 can be communicatively coupled to a metadata management service 752 (e.g., the metadata management system 552 of FIG. 5) that can be communicatively coupled to public Internet 754. Public Internet 754 can be communicatively coupled to the NAT gateway 738 contained in the control plane VCN 716 and contained in the data plane VCN 718. The service gateway 736 contained in the control plane VCN 716 and contained in the data plane VCN 718 can be communicatively couple to cloud services 756.

In some embodiments, the data plane VCN 718 can be integrated with customer tenancies 770. This integration can be useful or desirable for customers of the IaaS provider in some cases such as a case that may desire support when executing code. The customer may provide code to run that may be destructive, may communicate with other customer resources, or may otherwise cause undesirable effects. In response to this, the IaaS provider may determine whether to run code given to the IaaS provider by the customer.

In some examples, the customer of the IaaS provider may grant temporary network access to the IaaS provider and request a function to be attached to the data plane app tier 746. Code to run the function may be executed in the VMs 766(1)-(N), and the code may not be configured to run anywhere else on the data plane VCN 718. Each VM 766(1)-(N) may be connected to one customer tenancy 770. Respective containers 771(1)-(N) contained in the VMs 766(1)-(N) may be configured to run the code. In this case, there can be a dual isolation (e.g., the containers 771(1)-(N) running code, where the containers 771(1)-(N) may be contained in at least the VM 766(1)-(N) that are contained in the untrusted app subnet(s) 762), which may help prevent incorrect or otherwise undesirable code from damaging the network of the IaaS provider or from damaging a network of a different customer. The containers 771(1)-(N) may be communicatively coupled to the customer tenancy 770 and may be configured to transmit or receive data from the customer tenancy 770. The containers 771(1)-(N) may not be configured to transmit or receive data from any other entity in the data plane VCN 718. Upon completion of running the code, the IaaS provider may kill or otherwise dispose of the containers 771(1)-(N).

In some embodiments, the trusted app subnet(s) 760 may run code that may be owned or operated by the IaaS provider. In this embodiment, the trusted app subnet(s) 760 may be communicatively coupled to the DB subnet(s) 730 and be configured to execute CRUD operations in the DB subnet(s) 730. The untrusted app subnet(s) 762 may be communicatively coupled to the DB subnet(s) 730, but in this embodiment, the untrusted app subnet(s) may be configured to execute read operations in the DB subnet(s) 730. The containers 771(1)-(N) that can be contained in the VM 766(1)-(N) of each customer and that may run code from the customer may not be communicatively coupled with the DB subnet(s) 730.

In other embodiments, the control plane VCN 716 and the data plane VCN 718 may not be directly communicatively coupled. In this embodiment, there may be no direct communication between the control plane VCN 716 and the data plane VCN 718. However, communication can occur indirectly through at least one method. An LPG 710 may be established by the IaaS provider that can facilitate communication between the control plane VCN 716 and the data plane VCN 718. In another example, the control plane VCN 716 or the data plane VCN 718 can make a call to cloud services 756 via the service gateway 736. For example, a call to cloud services 756 from the control plane VCN 716 can include a request for a service that can communicate with the data plane VCN 718.

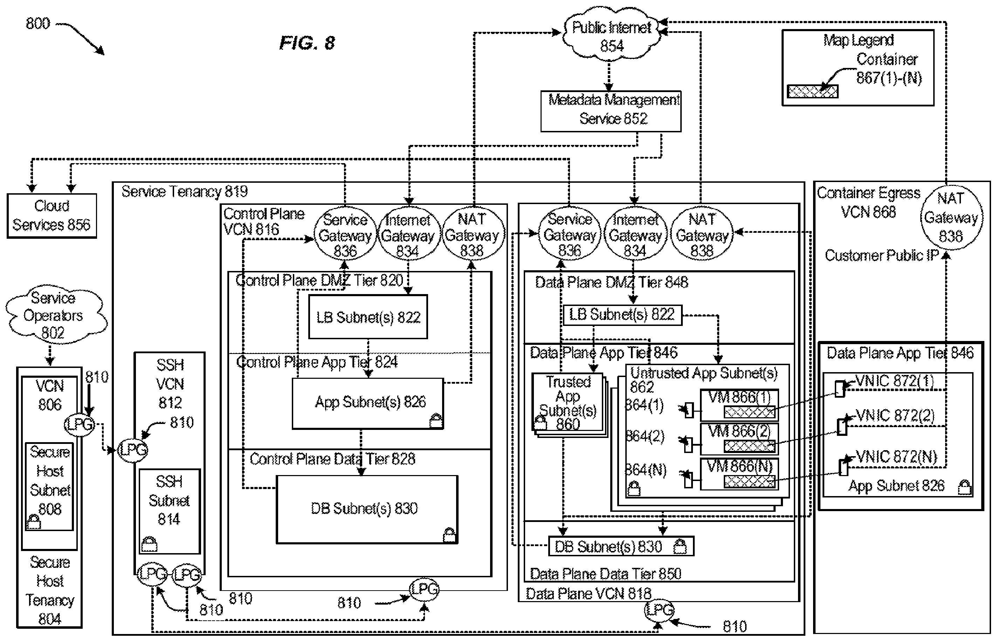

FIG. 8 is a block diagram 800 illustrating another example pattern of an IaaS architecture, according to at least one embodiment. Service operators 802 (e.g., service operators 502 of FIG. 5) can be communicatively coupled to a secure host tenancy 804 (e.g., the secure host tenancy 504 of FIG. 5) that can include a virtual cloud network (VCN) 806 (e.g., the VCN 506 of FIG. 5) and a secure host subnet 808 (e.g., the secure host subnet 508 of FIG. 5). The VCN 806 can include an LPG 810 (e.g., the LPG 510 of FIG. 5) that can be communicatively coupled to an SSH VCN 812 (e.g., the SSH VCN 512 of FIG. 5) via an LPG 810 contained in the SSH VCN 812. The SSH VCN 812 can include an SSH subnet 814 (e.g., the SSH subnet 514 of FIG. 5), and the SSH VCN 812 can be communicatively coupled to a control plane VCN 816 (e.g., the control plane VCN 516 of FIG. 5) via an LPG 810 contained in the control plane VCN 816 and to a data plane VCN 818 (e.g., the data plane 518 of FIG. 5) via an LPG 810 contained in the data plane VCN 818. The control plane VCN 816 and the data plane VCN 818 can be contained in a service tenancy 819 (e.g., the service tenancy 519 of FIG. 5).

The control plane VCN 816 can include a control plane DMZ tier 820 (e.g., the control plane DMZ tier 520 of FIG. 5) that can include LB subnet(s) 822 (e.g., LB subnet(s) 522 of FIG. 5), a control plane app tier 824 (e.g., the control plane app tier 524 of FIG. 5) that can include app subnet(s) 826 (e.g., app subnet(s) 526 of FIG. 5), a control plane data tier 828 (e.g., the control plane data tier 528 of FIG. 5) that can include DB subnet(s) 830 (e.g., DB subnet(s) 730 of FIG. 7). The LB subnet(s) 822 contained in the control plane DMZ tier 820 can be communicatively coupled to the app subnet(s) 826 contained in the control plane app tier 824 and to an Internet gateway 834 (e.g., the Internet gateway 534 of FIG. 5) that can be contained in the control plane VCN 816, and the app subnet(s) 826 can be communicatively coupled to the DB subnet(s) 830 contained in the control plane data tier 828 and to a service gateway 836 (e.g., the service gateway of FIG. 5) and a network address translation (NAT) gateway 838 (e.g., the NAT gateway 538 of FIG. 5). The control plane VCN 816 can include the service gateway 836 and the NAT gateway 838.

The data plane VCN 818 can include a data plane app tier 846 (e.g., the data plane app tier 546 of FIG. 5), a data plane DMZ tier 848 (e.g., the data plane DMZ tier 548 of FIG. 5), and a data plane data tier 850 (e.g., the data plane data tier 550 of FIG. 5). The data plane DMZ tier 848 can include LB subnet(s) 822 that can be communicatively coupled to trusted app subnet(s) 860 (e.g., trusted app subnet(s) 760 of FIG. 7) and untrusted app subnet(s) 862 (e.g., untrusted app subnet(s) 762 of FIG. 7) of the data plane app tier 846 and the Internet gateway 834 contained in the data plane VCN 818. The trusted app subnet(s) 860 can be communicatively coupled to the service gateway 836 contained in the data plane VCN 818, the NAT gateway 838 contained in the data plane VCN 818, and DB subnet(s) 830 contained in the data plane data tier 850. The untrusted app subnet(s) 862 can be communicatively coupled to the service gateway 836 contained in the data plane VCN 818 and DB subnet(s) 830 contained in the data plane data tier 850. The data plane data tier 850 can include DB subnet(s) 830 that can be communicatively coupled to the service gateway 836 contained in the data plane VCN 818.

The untrusted app subnet(s) 862 can include primary VNICs 864(1)-(N) that can be communicatively coupled to tenant virtual machines (VMs) 866(1)-(N) residing within the untrusted app subnet(s) 862. Each tenant VM 866(1)-(N) can run code in a respective container 867(1)-(N), and be communicatively coupled to an app subnet 826 that can be contained in a data plane app tier 846 that can be contained in a container egress VCN 868. Respective secondary VNICs 872(1)-(N) can facilitate communication between the untrusted app subnet(s) 862 contained in the data plane VCN 818 and the app subnet contained in the container egress VCN 868. The container egress VCN can include a NAT gateway 838 that can be communicatively coupled to public Internet 854 (e.g., public Internet 554 of FIG. 5).

The Internet gateway 834 contained in the control plane VCN 816 and contained in the data plane VCN 818 can be communicatively coupled to a metadata management service 852 (e.g., the metadata management system 552 of FIG. 5) that can be communicatively coupled to public Internet 854. Public Internet 854 can be communicatively coupled to the NAT gateway 838 contained in the control plane VCN 816 and contained in the data plane VCN 818. The service gateway 836 contained in the control plane VCN 816 and contained in the data plane VCN 818 can be communicatively couple to cloud services 856.

In some examples, the pattern illustrated by the architecture of block diagram 800 of FIG. 8 may be considered an exception to the pattern illustrated by the architecture of block diagram 700 of FIG. 7 and may be desirable for a customer of the IaaS provider if the IaaS provider cannot directly communicate with the customer (e.g., a disconnected region). The respective containers 867(1)-(N) that are contained in the VMs 866(1)-(N) for each customer can be accessed in real-time by the customer. The containers 867(1)-(N) may be configured to make calls to respective secondary VNICs 872(1)-(N) contained in app subnet(s) 826 of the data plane app tier 846 that can be contained in the container egress VCN 868. The secondary VNICs 872(1)-(N) can transmit the calls to the NAT gateway 838 that may transmit the calls to public Internet 854. In this example, the containers 867(1)-(N) that can be accessed in real-time by the customer can be isolated from the control plane VCN 816 and can be isolated from other entities contained in the data plane VCN 818. The containers 867(1)-(N) may also be isolated from resources from other customers.

In other examples, the customer can use the containers 867(1)-(N) to call cloud services 856. In this example, the customer may run code in the containers 867(1)-(N) that requests a service from cloud services 856. The containers 867(1)-(N) can transmit this request to the secondary VNICs 872(1)-(N) that can transmit the request to the NAT gateway that can transmit the request to public Internet 854. Public Internet 854 can transmit the request to LB subnet(s) 822 contained in the control plane VCN 816 via the Internet gateway 834. In response to determining the request is valid, the LB subnet(s) can transmit the request to app subnet(s) 826 that can transmit the request to cloud services 856 via the service gateway 836.

It should be appreciated that IaaS architectures 500, 600, 700, 800 depicted in the figures may have other components than those depicted. Further, the embodiments shown in the figures are only some examples of a cloud infrastructure system that may incorporate an embodiment of the disclosure. In some other embodiments, the IaaS systems may have more or fewer components than shown in the figures, may combine two or more components, or may have a different configuration or arrangement of components.

In certain embodiments, the IaaS systems described herein may include a suite of applications, middleware, and database service offerings that are delivered to a customer in a self-service, subscription-based, elastically scalable, reliable, highly available, and secure manner. An example of such an IaaS system is the Oracle Cloud Infrastructure (OCI) provided by the present assignee.

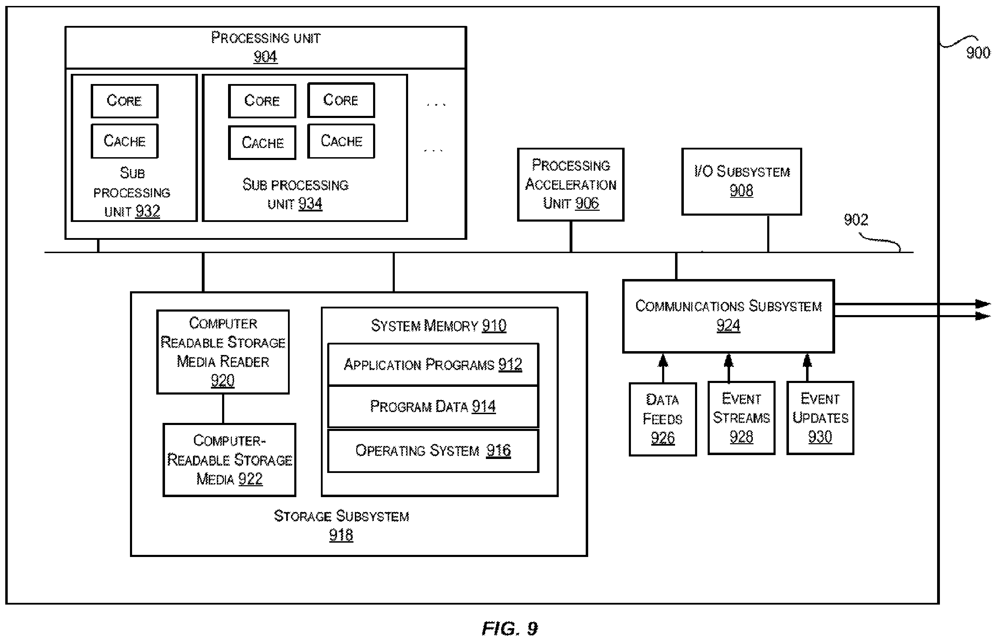

FIG. 9 illustrates an example computer system 900, in which various embodiments may be implemented. The system 900 may be used to implement any of the computer systems described above. As shown in the figure, computer system 900 includes a processing unit 904 that communicates with a number of peripheral subsystems via a bus subsystem 902. These peripheral subsystems may include a processing acceleration unit 906, an I/O subsystem 908, a storage subsystem 918 and a communications subsystem 924. Storage subsystem 918 includes tangible computer-readable storage media 922 and a system memory 910.

Bus subsystem 902 provides a mechanism for letting the various components and subsystems of computer system 900 communicate with each other as intended. Although bus subsystem 902 is shown schematically as a single bus, alternative embodiments of the bus subsystem may utilize multiple buses. Bus subsystem 902 may be any of several types of bus structures including a memory bus or memory controller, a peripheral bus, and a local bus using any of a variety of bus architectures. For example, such architectures may include an Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus, which can be implemented as a Mezzanine bus manufactured to the IEEE P1386.1 standard.

[0001] Processing unit 904, which can be implemented as one or more integrated circuits (e.g., a conventional microprocessor or microcontroller), controls the operation of computer system 900. One or more processors may be included in processing unit 904. These processors may include single core or multicore processors. In certain embodiments, processing unit 904 may be implemented as one or more independent processing units 932 and/or 934 with single or multicore processors included in each processing unit. In other embodiments, processing unit 904 may also be implemented as a quad-core processing unit formed by integrating two dual-core processors into a single chip.

In various embodiments, processing unit 904 can execute a variety of programs in response to program code and can maintain multiple concurrently executing programs or processes. At any given time, some or all of the program code to be executed can be resident in processor(s) 904 and/or in storage subsystem 918. Through suitable programming, processor(s) 904 can provide various functionalities described above. Computer system 900 may additionally include a processing acceleration unit 906, which can include a digital signal processor (DSP), a special-purpose processor, and/or the like.

/O subsystem 908 may include user interface input devices and user interface output devices. User interface input devices may include a keyboard, pointing devices such as a mouse or trackball, a touchpad or touch screen incorporated into a display, a scroll wheel, a click wheel, a dial, a button, a switch, a keypad, audio input devices with voice command recognition systems, microphones, and other types of input devices. User interface input devices may include, for example, motion sensing and/or gesture recognition devices such as the Microsoft Kinect^{®} motion sensor that enables users to control and interact with an input device, such as the Microsoft Xbox^{®} 360 game controller, through a natural user interface using gestures and spoken commands. User interface input devices may also include eye gesture recognition devices such as the Google Glass^{®} blink detector that detects eye activity (e.g., 'blinking' while taking pictures and/or making a menu selection) from users and transforms the eye gestures as input into an input device (e.g., Google Glass^{®}). Additionally, user interface input devices may include voice recognition sensing devices that enable users to interact with voice recognition systems (e.g., Siri^{®} navigator), through voice commands.

User interface input devices may also include, without limitation, three dimensional (3D) mice, joysticks or pointing sticks, gamepads and graphic tablets, and audio/visual devices such as speakers, digital cameras, digital camcorders, portable media players, webcams, image scanners, fingerprint scanners, barcode reader 3D scanners, 3D printers, laser rangefinders, and eye gaze tracking devices. Additionally, user interface input devices may include, for example, medical imaging input devices such as computed tomography, magnetic resonance imaging, position emission tomography, medical ultrasonography devices. User interface input devices may also include, for example, audio input devices such as MIDI keyboards, digital musical instruments and the like.

User interface output devices may include a display subsystem, indicator lights, or non-visual displays such as audio output devices, etc. The display subsystem may be a cathode ray tube (CRT), a flat-panel device, such as that using a liquid crystal display (LCD) or plasma display, a projection device, a touch screen, and the like. In general, use of the term "output device" is intended to include all possible types of devices and mechanisms for outputting information from computer system 900 to a user or other computer. For example, user interface output devices may include, without limitation, a variety of display devices that visually convey text, graphics and audio/video information such as monitors, printers, speakers, headphones, automotive navigation systems, plotters, voice output devices, and modems.

Computer system 900 may comprise a storage subsystem 918 that provides a tangible non-transitory computer-readable storage medium for storing software and data constructs that provide the functionality of the embodiments described in this disclosure. The software can include programs, code modules, instructions, scripts, etc., that when executed by one or more cores or processors of processing unit 904 provide the functionality described above. Storage subsystem 918 may also provide a repository for storing data used in accordance with the present disclosure.

As depicted in the example in FIG. 9, storage subsystem 918 can include various components including a system memory 910, computer-readable storage media 922, and a computer readable storage media reader 920. System memory 910 may store program instructions that are loadable and executable by processing unit 904. System memory 910 may also store data that is used during the execution of the instructions and/or data that is generated during the execution of the program instructions. Various different kinds of programs may be loaded into system memory 910 including but not limited to client applications, Web browsers, mid-tier applications, relational database management systems (RDBMS), virtual machines, containers, etc.

System memory 910 may also store an operating system 916. Examples of operating system 916 may include various versions of Microsoft Windows^{®}, Apple Macintosh^{®}, and/or Linux operating systems, a variety of commercially-available UNIX^{®} or UNIX-like operating systems (including without limitation the variety of GNU/Linux operating systems, the Google Chrome^{®} OS, and the like) and/or mobile operating systems such as iOS, Windows^{®} Phone, Android^{®} OS, BlackBerry^{®} OS, and Palm^{®} OS operating systems. In certain implementations where computer system 900 executes one or more virtual machines, the virtual machines along with their guest operating systems (GOSs) may be loaded into system memory 910 and executed by one or more processors or cores of processing unit 904.

System memory 910 can come in different configurations depending upon the type of computer system 900. For example, system memory 910 may be volatile memory (such as random access memory (RAM)) and/or non-volatile memory (such as read-only memory (ROM), flash memory, etc.) Different types of RAM configurations may be provided including a static random access memory (SRAM), a dynamic random access memory (DRAM), and others. In some implementations, system memory 910 may include a basic input/output system (BIOS) containing basic routines that help to transfer information between elements within computer system 900, such as during start-up.

Computer-readable storage media 922 may represent remote, local, fixed, and/or removable storage devices plus storage media for temporarily and/or more permanently containing, storing, computer-readable information for use by computer system 900 including instructions executable by processing unit 904 of computer system 900.

Computer-readable storage media 922 can include any appropriate media known or used in the art, including storage media and communication media, such as but not limited to, volatile and non-volatile, removable and non-removable media implemented in any method or technology for storage and/or transmission of information. This can include tangible computer-readable storage media such as RAM, ROM, electronically erasable programmable ROM (EEPROM), flash memory or other memory technology, CD-ROM, digital versatile disk (DVD), or other optical storage, magnetic cassettes, magnetic tape, magnetic disk storage or other magnetic storage devices, or other tangible computer readable media.

By way of example, computer-readable storage media 922 may include a hard disk drive that reads from or writes to non-removable, nonvolatile magnetic media, a magnetic disk drive that reads from or writes to a removable, nonvolatile magnetic disk, and an optical disk drive that reads from or writes to a removable, nonvolatile optical disk such as a CD ROM, DVD, and Blu-Ray^{®} disk, or other optical media. Computer-readable storage media 922 may include, but is not limited to, Zip^{®} drives, flash memory cards, universal serial bus (USB) flash drives, secure digital (SD) cards, DVD disks, digital video tape, and the like. Computer-readable storage media 922 may also include, solid-state drives (SSD) based on non-volatile memory such as flash-memory based SSDs, enterprise flash drives, solid state ROM, and the like, SSDs based on volatile memory such as solid state RAM, dynamic RAM, static RAM, DRAM-based SSDs, magnetoresistive RAM (MRAM) SSDs, and hybrid SSDs that use a combination of DRAM and flash memory based SSDs. The disk drives and their associated computer-readable media may provide non-volatile storage of computer-readable instructions, data structures, program modules, and other data for computer system 900.

Machine-readable instructions executable by one or more processors or cores of processing unit 904 may be stored on a non-transitory computer-readable storage medium. A non-transitory computer-readable storage medium can include physically tangible memory or storage devices that include volatile memory storage devices and/or non-volatile storage devices. Examples of non-transitory computer-readable storage medium include magnetic storage media (e.g., disk or tapes), optical storage media (e.g., DVDs, CDs), various types of RAM, ROM, or flash memory, hard drives, floppy drives, detachable memory drives (e.g., USB drives), or other type of storage device.

Communications subsystem 924 provides an interface to other computer systems and networks. Communications subsystem 924 serves as an interface for receiving data from and transmitting data to other systems from computer system 900. For example, communications subsystem 924 may enable computer system 900 to connect to one or more devices via the Internet. In some embodiments communications subsystem 924 can include radio frequency (RF) transceiver components for accessing wireless voice and/or data networks (e.g., using cellular telephone technology, advanced data network technology, such as 3G, 4G or EDGE (enhanced data rates for global evolution), WiFi (IEEE 802.11 family standards, or other mobile communication technologies, or any combination thereof), global positioning system (GPS) receiver components, and/or other components. In some embodiments communications subsystem 924 can provide wired network connectivity (e.g., Ethernet) in addition to or instead of a wireless interface.

In some embodiments, communications subsystem 924 may also receive input communication in the form of structured and/or unstructured data feeds 926, event streams 928, event updates 930, and the like on behalf of one or more users who may use computer system 900.

By way of example, communications subsystem 924 may be configured to receive data feeds 926 in real-time from users of social networks and/or other communication services such as Twitter^{®} feeds, Facebook^{®} updates, web feeds such as Rich Site Summary (RSS) feeds, and/or real-time updates from one or more third party information sources.

Additionally, communications subsystem 924 may also be configured to receive data in the form of continuous data streams, which may include event streams 928 of real-time events and/or event updates 930, that may be continuous or unbounded in nature with no explicit end. Examples of applications that generate continuous data may include, for example, sensor data applications, financial tickers, network performance measuring tools (e.g., network monitoring and traffic management applications), clickstream analysis tools, automobile traffic monitoring, and the like.

Communications subsystem 924 may also be configured to output the structured and/or unstructured data feeds 926, event streams 928, event updates 930, and the like to one or more databases that may be in communication with one or more streaming data source computers coupled to computer system 900.

Computer system 900 can be one of various types, including a handheld portable device (e.g., an iPhone^{®} cellular phone, an iPad^{®} computing tablet, a PDA), a wearable device (e.g., a Google Glass^{®} head mounted display), a PC, a workstation, a mainframe, a kiosk, a server rack, or any other data processing system.

Due to the ever-changing nature of computers and networks, the description of computer system 900 depicted in the figure is intended only as a specific example. Many other configurations having more or fewer components than the system depicted in the figure are possible. For example, customized hardware might also be used and/or particular elements might be implemented in hardware, firmware, software (including applets), or a combination. Further, connection to other computing devices, such as network input/output devices, may be employed. Based on the disclosure and teachings provided herein, a person of ordinary skill in the art will appreciate other ways and/or methods to implement the various embodiments.

Embodiments are not restricted to operation within certain specific data processing environments, but are free to operate within a plurality of data processing environments. Additionally, although embodiments have been described using a particular series of transactions and steps, it should be apparent to those skilled in the art that the scope of the present disclosure is not limited to the described series of transactions and steps. Various features and aspects of the above-described embodiments may be used individually or jointly.

Further, while embodiments have been described using a particular combination of hardware and software, it should be recognized that other combinations of hardware and software are also within the scope of the present disclosure. Embodiments may be implemented only in hardware, or only in software, or using combinations thereof. The various processes described herein can be implemented on the same processor or different processors in any combination. Accordingly, where components or modules are described as being configured to perform certain operations, such configuration can be accomplished, e.g., by designing electronic circuits to perform the operation, by programming programmable electronic circuits (such as microprocessors) to perform the operation, or any combination thereof. Processes can communicate using a variety of techniques including but not limited to conventional techniques for inter process communication, and different pairs of processes may use different techniques, or the same pair of processes may use different techniques at different times.

The specification and drawings are, accordingly, to be regarded in an illustrative rather than a restrictive sense.

The use of the terms "a" and "an" and "the" and similar referents in the context of describing the disclosed embodiments (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. The term "connected" is to be construed as partly or wholly contained within, attached to, or joined together, even if there is something intervening. Recitation of ranges of values herein are merely intended to serve as a shorthand method of referring individually to each separate value falling within the range, unless otherwise indicated herein and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate embodiments and does not pose a limitation on the scope of the disclosure unless otherwise claimed. No language in the specification should be construed as indicating any non-claimed element as essential to the practice of the disclosure.

Disjunctive language such as the phrase "at least one of X, Y, or Z," unless specifically stated otherwise, is intended to be understood within the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

Preferred embodiments of this disclosure are described herein, including the best mode known for carrying out the disclosure. Variations of those preferred embodiments may become apparent to those of ordinary skill in the art upon reading the foregoing description. Those of ordinary skill should be able to employ such variations as appropriate and the disclosure may be practiced otherwise than as specifically described herein.

In the foregoing specification, aspects of the disclosure are described with reference to specific embodiments thereof, but those skilled in the art will recognize that the disclosure is not limited thereto. Various features and aspects of the above-described disclosure may be used individually or jointly. Further, embodiments can be utilized in any number of environments and applications beyond those described herein without departing from the broader scope of the specification. The specification and drawings are, accordingly, to be regarded as illustrative rather than restrictive.

## Claims

1. A method comprising:
receiving a logout request from a user (142; 202) through a protected application (212) at a first one (204; 206) of two systems; and, in response:
logging the user out of the first one of the two systems; and
utilizing a trust mechanism to log the user out of a second one (206; 204) of the two systems;
wherein the first one of the two systems comprises a role-based access control, RBAC, system and the second one of the two systems comprises an attribute-based access control, ABAC, system, or wherein the first one of the two systems comprises an ABAC system and the second one of the two systems comprises an RBAC system;
wherein the first one of the two systems: identifies other applications of the first system to which the user is logged in; and logs the user out of those other applications.

2. The method of claim 1, wherein the trust mechanism comprises at least one token.

3. The method of claim 1, wherein the logout request directs the logging out of the user from the first one of the two systems.

4. The method of claim 3, wherein logging the user out of the first one of the two systems comprises expiring a session of the user on the first system.

5. The method of claim 4, wherein utilizing the trust mechanisms to log the user out of the second one of the two systems comprises redirecting the user to the second one of the two systems.

6. The method of claim 5, wherein utilizing the trust mechanisms to log the user out of the second one of the two systems comprises sending a JSON web token, JWT, from a user browser to the second one of the two systems.

7. The method of claim 6, wherein the JWT comprises a post logout redirect URL, preferably wherein the JWT further comprises an IAM login private key.

8. The method of claim 6, wherein utilizing the trust mechanisms to log the user out of the second one of the two systems comprises clearing cookies and/or tokens of the second one of the two systems from the user browser.

9. The method of claim 8, wherein utilizing the trust mechanisms to log the user out of the second one of the two systems comprises logging the user out of applications of the second one of the two systems.

10. The method of claim 9, wherein utilizing the trust mechanisms to log the user out of the second one of the two systems comprises sending a confirmation of logout from the second one of the two systems to the user browser, the confirmation of logout comprising the JWT.

11. The method of claim 10, wherein utilizing the trust mechanisms to log the user out of the second one of the two systems comprises sending the JWT from the user browser to the first system as confirmation of completion of the logout from the second one of the two systems, preferably further comprising logging out other applications of the first system via communication of a front channel logout URL.

12. The method of claim 1, wherein the first one of the two systems comprises a RBAC system and the second one of the two systems comprises an ABAC system, and the second one of the two systems:
identifies other applications of the second system to which the user is logged in;
receives front channel logout URLs for the other applications of the second system to which the user is logged in; and
directs loading of the front channel logout URLs by the other applications of the second system to which the user is logged in.

13. A system comprising:
a first access control system (204; 206) having a first login protocol, the first access control system comprising:
at least one first processor; and
a memory comprising a plurality of instructions executable by the at least one first processor, and
a second access control system, wherein the second access control system has a second login protocol independent of the first login protocol,
wherein the first access control system is configured to:
receive a logout request from a user (142; 202) through a protected application (212) at the first access control system; and, in response:
log the user out of the first access control system; and
utilize a trust mechanism to log the user out of the second access control system (206; 204);
wherein the first access control system comprises a role-based access control, RBAC, system and the second access control system comprises an attribute-based access control, ABAC, system, or wherein the first access control system comprises an ABAC system and the second access control system comprises an RBAC system;
wherein the first access control system: identifies other applications of the first access control system to which the user is logged in; and logs the user out of those other applications.

14. The system of claim 13, wherein the logout request directs the logging out of the user from the first access control system, wherein logging the user out of the first access control system comprises expiring a session of the user on the first access control system, wherein utilizing the trust mechanism to log the user out of the second access control system comprises redirecting the user to the second access control system, and wherein utilizing the trust mechanism to log the user out of the second access control system comprises sending a JSON web token, JWT, from a user browser to the second access control system.

15. A non-transitory computer-readable storage medium storing a plurality of instructions executable by one or more processors, the plurality of instructions when executed by the one or more processors cause the one or more processors to:
receive a logout request from a user (142; 202) through a protected application (212) at a first one of two systems; and, in response:
log the user out of the first one (204; 206) of the two systems; and
utilize a trust mechanism to log the user out of a second one (206; 204) of the two systems;
wherein the first one of the two systems comprises a role-based access control, RBAC, system, and wherein the second one of the two systems comprises an attribute-based access control, ABAC, system, or wherein the first one of the two systems comprises an ABAC system and the second one of the two systems comprises an RBAC system;
wherein the first one of the two systems: identifies other applications of the first system to which the user is logged in; and logs the user out of those other applications.

## Patentansprüche

1. Verfahren, das Folgendes umfasst:
Empfangen einer Abmeldeanforderung von einem Benutzer (142; 202) über eine geschützte Anwendung (212) in einem ersten (204; 206) von zwei Systemen; und als Reaktion darauf:
Abmelden des Benutzers aus dem ersten der beiden Systeme; und
Verwenden eines Vertrauensmechanismus, um den Benutzer aus einem zweiten (206; 204) der beiden Systeme abzumelden;
wobei das erste der beiden Systeme ein rollenbasiertes Zugriffskontrollsystem (Role-Based Access Control, RBAC) umfasst und das zweite der beiden Systeme ein attributbasiertes Zugriffskontrollsystem (Attribute-Based Access Control, ABAC) umfasst, oder wobei das erste der beiden Systeme ein ABAC-System umfasst und das zweite der beiden Systeme ein RBAC-System umfasst;
wobei das erste der beiden Systeme: andere Anwendungen des ersten Systems identifiziert, bei denen der Benutzer angemeldet ist; und den Benutzer aus diesen anderen Anwendungen abmeldet.

2. Verfahren nach Anspruch 1, wobei der Vertrauensmechanismus mindestens ein Token umfasst.

3. Verfahren nach Anspruch 1, wobei die Abmeldeanforderung die Abmeldung des Benutzers aus dem ersten der beiden Systeme veranlasst.

4. Verfahren nach Anspruch 3, wobei das Abmelden des Benutzers aus dem ersten der beiden Systeme das Ablaufenlassen einer Sitzung des Benutzers auf dem ersten System umfasst.

5. Verfahren nach Anspruch 4, wobei die Nutzung der Vertrauensmechanismen zum Abmelden des Benutzers aus dem zweiten der beiden Systeme das Umleiten des Benutzers zum zweiten der beiden Systeme umfasst.

6. Verfahren nach Anspruch 5, wobei die Nutzung der Vertrauensmechanismen zum Abmelden des Benutzers aus dem zweiten der beiden Systeme das Senden eines JSON-Web-Tokens JWT von einem Browser des Benutzers an das zweite der beiden Systeme umfasst.

7. Verfahren nach Anspruch 6, wobei das JWT eine Weiterleitungs-URL nach der Abmeldung umfasst, vorzugsweise wobei das JWT ferner einen privaten IAM-Anmeldeschlüssel umfasst.

8. Verfahren nach Anspruch 6, wobei die Nutzung der Vertrauensmechanismen zum Abmelden des Benutzers aus dem zweiten der beiden Systeme das Löschen von Cookies und/oder Tokens des zweiten der beiden Systeme aus dem Browser des Benutzers umfasst.

9. Verfahren nach Anspruch 8, wobei die Nutzung der Vertrauensmechanismen zum Abmelden des Benutzers aus dem zweiten der beiden Systeme das Abmelden des Benutzers aus Anwendungen des zweiten der beiden Systeme umfasst.

10. Verfahren nach Anspruch 9, wobei die Nutzung der Vertrauensmechanismen zum Abmelden des Benutzers aus dem zweiten der beiden Systeme das Senden einer Abmeldebestätigung vom zweiten der beiden Systeme an den Browser des Benutzers umfasst, wobei die Abmeldebestätigung das JWT umfasst.

11. Verfahren nach Anspruch 10, wobei die Nutzung der Vertrauensmechanismen zum Abmelden des Benutzers aus dem zweiten der beiden Systeme das Senden des JWT vom Browser des Benutzers an das erste System als Bestätigung des Abschlusses der Abmeldung aus dem zweiten der beiden Systeme umfasst, vorzugsweise ferner umfassend das Abmelden anderer Anwendungen des ersten Systems über die Kommunikation einer Front-Channel-Abmelde-URL.

12. Verfahren nach Anspruch 1, wobei das erste der beiden Systeme ein RBAC-System umfasst und das zweite der beiden Systeme ein ABAC-System umfasst, und das zweite der beiden Systeme:
andere Anwendungen des zweiten Systems identifiziert, bei denen der Benutzer angemeldet ist;
Front-Channel-Abmelde-URLs für die anderen Anwendungen des zweiten Systems empfängt, bei denen der Benutzer angemeldet ist; und
das Laden der Front-Channel-Abmelde-URLs durch die anderen Anwendungen des zweiten Systems veranlasst, bei denen der Benutzer angemeldet ist.

13. System das umfasst:
ein erstes Zugriffskontrollsystem (204; 206) mit einem ersten Anmeldeprotokoll, wobei das erste Zugriffskontrollsystem umfasst:
mindestens einen ersten Prozessor; und
einen Speicher, der eine Vielzahl von Befehlen umfasst, die von dem mindestens einen ersten Prozessor ausgeführt werden können, und
ein zweites Zugriffskontrollsystem, wobei das zweite Zugriffskontrollsystem ein vom ersten Anmeldeprotokoll unabhängiges zweites Anmeldeprotokoll aufweist,
wobei das erste Zugriffskontrollsystem für Folgendes konfiguriert ist:
Empfangen einer Abmeldeanforderung von einem Benutzer (142; 202) über eine geschützte Anwendung (212) am ersten Zugriffskontrollsystem; und als Reaktion darauf:
Abmelden des Benutzers vom ersten Zugriffskontrollsystem; und
Verwenden eines Vertrauensmechanismus, um den Benutzer vom zweiten Zugriffskontrollsystem (206; 204) abzumelden;
wobei das erste Zugriffskontrollsystem ein rollenbasiertes Zugriffskontrollsystem RBAC umfasst und das zweite Zugriffskontrollsystem ein attributbasiertes Zugriffskontrollsystem ABAC umfasst, oder wobei das erste Zugriffskontrollsystem ein ABAC-System umfasst und das zweite Zugriffskontrollsystem ein RBAC-System umfasst;
wobei das erste Zugriffskontrollsystem: andere Anwendungen des ersten Zugriffskontrollsystems identifiziert, bei denen der Benutzer angemeldet ist; und den Benutzer aus diesen anderen Anwendungen abmeldet.

14. System nach Anspruch 13, wobei die Abmeldeanforderung das Abmelden des Benutzers aus dem ersten Zugriffskontrollsystem veranlasst, wobei das Abmelden des Benutzers vom ersten Zugriffskontrollsystem das Ablaufenlassen einer Sitzung des Benutzers auf dem ersten Zugriffskontrollsystem umfasst, wobei die Nutzung des Vertrauensmechanismus zum Abmelden des Benutzers vom zweiten Zugriffskontrollsystem das Umleiten des Benutzers zum zweiten Zugriffskontrollsystem umfasst, und wobei die Nutzung des Vertrauensmechanismus zum Abmelden des Benutzers vom zweiten Zugriffskontrollsystem das Senden eines JSON-Web-Tokens JWT von einem Browser des Benutzers an das zweite Zugriffskontrollsystem umfasst.

15. Nichtflüchtiges, computerlesbares Speichermedium, das eine Vielzahl von Anweisungen speichert, die von einem oder mehreren Prozessoren ausführbar sind, wobei die Vielzahl von Anweisungen, wenn sie von dem einen oder den mehreren Prozessoren ausgeführt werden, bewirkt, dass der eine oder die mehreren Prozessoren Folgendes ausführen:
Empfangen einer Abmeldeanforderung von einem Benutzer (142; 202) über eine geschützte Anwendung (212) in einem ersten von zwei Systemen; und als Reaktion darauf:
Abmelden des Benutzers aus dem ersten (204; 206) der beiden Systeme; und
Verwenden eines Vertrauensmechanismus, um den Benutzer aus einem zweiten (206; 204) der beiden Systeme abzumelden;
wobei das erste der beiden Systeme ein rollenbasiertes Zugriffskontrollsystem RBAC umfasst, und wobei das zweite der beiden Systeme ein attributbasiertes Zugriffskontrollsystem ABAC umfasst, oder wobei das erste der beiden Systeme ein ABAC-System umfasst und das zweite der beiden Systeme ein RBAC-System umfasst;
wobei das erste der beiden Systeme: andere Anwendungen des ersten Systems identifiziert, bei denen der Benutzer angemeldet ist; und den Benutzer aus diesen anderen Anwendungen abmeldet.

## Revendications

1. Procédé comprenant :
la réception d'une demande de déconnexion par un utilisateur (142 ; 202) par le biais d'une application protégée (212) à un premier (204 ; 206) de deux systèmes ; et, en réponse :
la déconnexion de l'utilisateur du premier des deux systèmes ; et
l'utilisation d'un mécanisme fiduciaire pour déconnecter l'utilisateur d'un deuxième (206 ; 204) des deux systèmes ;
le premier des deux systèmes comprenant un contrôle d'accès axé sur les rôles, RBAC, et le deuxième d'un des deux systèmes comprenant un contrôle d'accès basé sur des attributs, ABAC, ou le premier des deux systèmes comprenant un système ABAC et le deuxième des deux systèmes comprenant un système RBAC ;
le premier des deux systèmes : identifiant d'autres applications du premier système auquel l'utilisateur est connecté ; et déconnectant l'utilisateur de ces autres applications.

2. Procédé selon la revendication 1, le mécanisme fiduciaire comprenant au moins un token.

3. Procédé selon la revendication 1, la demande de déconnexion dirigeant la déconnexion de l'utilisateur du premier des deux systèmes.

4. Procédé selon la revendication 3, déconnecter l'utilisateur du premier des deux systèmes comprenant l'expiration d'une session de l'utilisateur sur le premier système.

5. Procédé selon la revendication 4, l'utilisation des mécanismes fiduciaires pour déconnecter l'utilisateur du deuxième des deux systèmes comprenant la redirection de l'utilisateur au deuxième des deux systèmes.

6. Procédé selon la revendication 5, l'utilisation des mécanismes fiduciaires pour déconnecter l'utilisateur du deuxième des deux systèmes comprenant l'envoi, d'un navigateur utilisateur, d'un token Web JSON, JWT, au deuxième des deux systèmes.

7. Procédé selon la revendication 6, le JWT comprend un URL de redirection post-déconnexion, le JWT comprenant de préférence une clé privée de connexion IAM.

8. Procédé selon la revendication 6, l'utilisation des mécanismes fiduciaires pour déconnecter l'utilisateur du deuxième des deux systèmes comprenant l'effacement, du navigateur utilisateur, de cookies et/ou de tokens du deuxième des deux systèmes.

9. Procédé selon la revendication 8, l'utilisation des mécanismes fiduciaires pour déconnecter l'utilisateur du deuxième des deux systèmes comprenant la déconnexion de l'utilisateur d'applications du deuxième des deux systèmes.

10. Procédé selon la revendication 9, l'utilisation des mécanismes fiduciaires pour déconnecter l'utilisateur du deuxième des deux systèmes comprenant l'envoi d'une confirmation de la déconnexion du deuxième des deux systèmes au navigateur utilisateur, la confirmation de la déconnexion comprenant le JWT.

11. Procédé selon la revendication 10, l'utilisation des mécanismes fiduciaires pour déconnecter l'utilisateur du deuxième des deux systèmes comprenant l'envoi du JWT du navigateur utilisateur au premier système en tant que confirmation de l'exécution de la déconnexion du deuxième des deux systèmes, comprenant de préférence la déconnexion d'autres applications du premier système par le biais d'une communication d'un URL de déconnexion du canal frontal.

12. Procédé selon la revendication 1, le premier des deux systèmes comprenant un système RBAC, et le deuxième des deux systèmes comprenant un système ABAC, et le deuxième des deux systèmes :
identifiant d'autres applications du deuxième système auquel l'utilisateur est connecté ;
recevant des URL de déconnexion du canal frontal pour les autres applications du deuxième système auquel l'utilisateur est connecté ; et
dirigeant le chargement des URL de déconnexion du canal frontal par les autres applications du deuxième système auquel l'utilisateur est connecté.

13. Système comprenant :
un premier système de contrôle de l'accès (204 ; 206) possédant un premier protocole de connexion, le premier système de contrôle de l'accès comprenant :
au moins un premier processeur ; et
une mémoire comprenant une pluralité d'instructions exécutables par l'au moins un premier processeur ; et
un deuxième système de contrôle de l'accès, le deuxième système de contrôle de l'accès possédant un deuxième protocole de connexion indépendant du premier protocole de connexion,
le premier système de contrôle de l'accès étant configuré pour :
recevoir une demande de déconnexion d'un utilisateur (142 ; 202) par le biais d'une application protégée (212) au premier système de contrôle de l'accès ; et, en réponse :
utiliser un mécanisme fiduciaire pour déconnecter l'utilisateur du deuxième système de contrôle de l'accès (206 ; 204) ;
le premier système de contrôle de l'accès comprenant un contrôle d'accès axé sur les rôles, RBAC, et le deuxième système de contrôle de l'accès comprenant un contrôle d'accès basé sur des attributs, ABAC, ou le premier système de contrôle de l'accès comprenant un système ABAC et le deuxième système de contrôle de l'accès comprenant un système RBAC ;
le premier système de contrôle de l'accès : identifiant d'autres applications du premier système de contrôle de l'accès auquel l'utilisateur est connecté ; et déconnectant l'utilisateur de ces autres applications.

14. Système selon la revendication 13, la demande de déconnexion dirigeant la déconnexion de l'utilisateur du premier système de contrôle de l'accès, la déconnexion de l'utilisateur du premier système de contrôle de l'accès comportant l'expiration d'une session de l'utilisateur sur le premier système de contrôle de l'accès, l'utilisation du mécanisme fiduciaire pour déconnecter l'utilisateur du deuxième système de contrôle de l'accès comportant la redirection de l'utilisateur au deuxième système de contrôle de l'accès, et l'utilisation du mécanisme fiduciaire pour déconnecter l'utilisateur du deuxième système de contrôle de l'accès comprenant l'envoi, d'un navigateur utilisateur, d'un token Web JSON, JWT, au deuxième système de contrôle de l'accès.

15. Support mémoire permanent lisible par ordinateur stockant une pluralité d'instructions exécutables par l'un ou plusieurs processeurs, de sorte que lorsque la pluralité d'instructions sont exécutées par l'un ou plusieurs processeurs, ceci donne lieu, pour l'un ou plusieurs processeurs, à
la réception d'une demande de déconnexion d'un utilisateur (142 ; 202) par le bais d'une application protégée (212) à un premier des deux systèmes ; et, en réponse :
à la déconnexion du premier (204 ; 206) des deux systèmes ; et
l'utilisation d'un mécanisme fiduciaire pour déconnecter l'utilisateur du deuxième (206 ; 204) des deux systèmes,
le premier des deux systèmes comprenant un contrôle d'accès axé sur les rôles, RBAC, et le deuxième des deux systèmes comprenant un contrôle d'accès basé sur des attributs, ABAC, ou le premier des deux systèmes comprenant un système ABAC et le deuxième des deux systèmes comprenant un système RBAC ;
le premier des deux systèmes : identifiant d'autres applications du premier système auquel l'utilisateur est connecté ; et déconnectant l'utilisateur de ces autres applications.
